# EUROPEAN PATENT APPLICATION

(11) **EP 2 357 297 A1**
(43) Date of publication of application: **17.08.2011**
(21) Application number: 09830422.3
(22) Date of filing: 02.12.2009
(51) Int. Cl.: E04D 13/18, E04D 13/00, H01L 31/042

(54) **MOUNT FOR INSTALLING STRUCTURE, AND SOLAR CELL SYSTEM**

(30) Priority: 05.12.2008 JP 2008311260
(71) Applicant: Sharp Kabushiki Kaisha, Osaka-shi, Osaka 545-8522 (JP)
(72) Inventor: SAGAYAMA, Kenichi, Osaka-shi, Osaka 545-8522 (JP); OHKOSHI, Yasushi, Osaka-shi, Osaka 545-8522 (JP)
(74) Representative: Hoffmann, Jörg Peter
(86) International application number: PCT/JP2009/070244
(87) International publication number: WO 2010/064656

(57) **Abstract**

A stand is assumed to be a stand having a triangular structure, increases the strength between the front end portion of a mounting bar and a bracket and readily positions a solar cell module even without particularly increasing the number of components, and further prevents the corrosion of the bracket and metal fittings around the bracket.

Abutting portions 73m of a front bracket 73 position a frame member 21 of a solar cell module 2 such that the frame member juts out beyond a bottom plate 73a of the front bracket 73 toward the abutting portions 73m. Accordingly, even if rainwater infiltrates the space between the solar cell module 2 and a mounting bar 11, gradually runs along the bottom face of the solar cell module 2, and turns into waterdrops W, and then the waterdrops W drop from the edge portion of the solar cell module 2, the waterdrops W will not fall on the bottom plate 73a of the front bracket 73 and the base rail 71. [Selected drawing] FIG. 5

## Description

### Technical Field

The present invention relates to a structure installation stand suitable for installing a flat plate-like structure, such as a solar cell module, on the ground or a flat roof, and a solar cell system using the same.

### Background Art

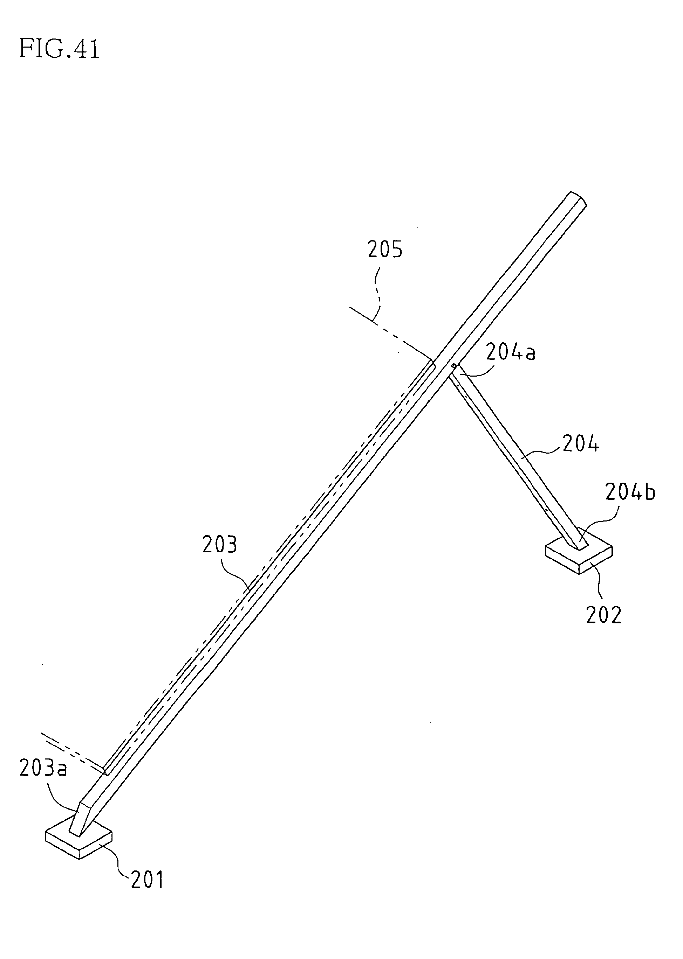

In conventional stands of this type, mounting bars are inclined relative to a base face such as the ground or a flat roof, and fixed in order to support a solar cell module facing the sun, and the solar cell module is supported on the inclined mounting bars. For example, as shown in FIG. 41, two base blocks 201 and 202 are spaced apart and fixed, and a front end portion 203a of a mounting bar 203 is joined and fixed to the front base block 201. An upper end portion 204a of a vertical bar 204 is joined at a location about one-quarter from the upper end of the mounting bar 203, and a lower end portion 204b of the vertical bar 204 is joined to the rear base block 202, and thereby the vertical bar 204 is interposed between the mounting bar 203 and the rear base block 202. In this way, the mounting bar 203 is inclined and fixed. Then, a plurality of such mounting bars 203 are arranged side by side, and a solar cell module 205 is mounted and supported on the mounting bars 203.

Alternatively, four leg portions are arranged upright on the ground or a flat roof, the two leg portions on the front side are formed shorter than the two leg portions on the rear side, and a rectangular frame body is fixedly supported on these leg portions at an inclination. A solar cell module is mounted on this frame body so as to cause the light-receiving face of the solar cell module to substantially face in the incidence direction of sunlight (see Patent Documents 1 and 2).

### Prior Art Documents

### Patent Documents

Patent Document 1: JP 2000-101123A
Patent Document 2: JP H11-177115A

### Summary of the Invention

### Problems to be Solved by the Invention

In cases where a flat plate-like structure such as a solar cell module is supported, since the wind pressure received by the structure is great, the structure needs to be able to sufficiently withstand not only the load of the structure itself, but also the load generated from the wind pressure.

For example, in the structure in which four leg portions are arranged upright, and a solar cell module is supported on these leg portions as in Patent Documents 1 and 2, if the load generated from the weight of the structure and wind pressure is exerted, forces in the vertical and horizontal directions are exerted on each leg portion, and thus the leg portions must be firmly supported so as to prevent these leg portions from falling over. Accordingly, it has been necessary to increase the number of bolts for fixedly supporting the leg portions and metal reinforcing fittings. However, as a result, the number of components and the number of assembly steps increased, which has led to more difficult assembly work at the job site and a rise in cost.

In contrast, the triangular structure in which the mounting bar 203, the vertical bar 204, and a base face are combined in triangular form as shown in FIG. 41 can sufficiently withstand forces in both the vertical and horizontal directions even if the number of components is not particularly increased.

In order to keep the original strength of such a triangular structure sufficiently high, it is necessary to sufficiently increase, not only the strength of the mounting bar 203 and the vertical bar 204, which goes without saying, but also the strength of the joints of the mounting bar 203, the vertical bar 204, and the base blocks 201 and 202. A great force is exerted particularly on the front end portion of the mounting bar 203, and thus the joint strength of this front end portion needs to be increased.

For example, in a joining structure in which the front end portion of the mounting bar 203 is fastened to a bracket (not shown) fixed on the base block 201 side, the strength between the front end portion of the mounting bar 203 and the bracket needs to be increased. However, if the number of bolts or metal reinforcing fittings is increased to improve the strength, the number of components and the number of assembly steps will increase, which will lead to more difficult assembly work at the job site and a rise in cost, as with the case of Patent Documents 1 and 2.

There are cases where the inclination angle of the mounting bar 203 is increased in order to dispose the solar cell module 205 facing the sun. In this case, if the solar cell module 205 is simply mounted on the mounting bar 203, the solar cell module 205 slides on the mounting bar 203, and thus it will be difficult to position the solar cell module 205. Accordingly, although it is preferable to provide, for instance, a stopper for the solar cell module 205 on the mounting bar 203, the number of components and the number of assembly steps will increase by providing such a stopper, which will lead to more difficult assembly work and a rise in cost.

Moreover, if rainwater infiltrates the space between the solar cell module 205 and the mounting bar 203, this rainwater runs along the bottom face of the solar cell module and the top plate of the mounting bar 203, and gradually flows down to the front end of the mounting bar 203, and then the bracket at the front end of the mounting bar 203 and metal fittings around the bracket get wet. Such a wet state may continue for a long time, and the bracket and the metal fittings around the bracket may become corroded, which has been a problem.

In view of this, the present invention has been conceived in light of the above conventional problems, and an object thereof is to provide a structure installation stand that is assumed to be a stand having a triangular structure, is able to increase the strength between the front end portion of a mounting bar and a bracket and readily position a solar cell module even without particularly increasing the number of components, and is further able to prevent the corrosion of the bracket and metal fittings around the bracket, and a solar cell system using the same.

### Means for Solving the Problems

In order to solve the above problems, a structure installation stand of the present invention includes a front bracket fixed onto a base face and a mounting bar on which a structure is mounted, the mounting bar being inclined relative to the base face, and a front end portion of the inclined mounting bar being fixed with the front bracket, wherein the front bracket has an abutting portion that abuts against an edge portion on an inclined lower side of the structure mounted on the inclined mounting bar.

The mounting bar and the structure are prevented from moving by the edge portion on the inclined lower side of the structure abutting against the abutting portion of the front bracket.

Moreover, the front bracket has a bottom portion that abuts against the base face, and a side wall portion that is arranged upright from the bottom portion, the side wall portion is fastened to the front end portion of the inclined mounting bar, a front edge side of the side wall portion protrudes above the front end portion of the mounting bar so as to form the abutting portion, and the abutting portion abuts against the edge portion on the inclined lower side of the structure mounted on the mounting bar.

The edge portion on the inclined lower side of the structure is positioned, by the abutting portion of the front bracket, so as to jut out beyond the bottom portion of the front bracket.

Moreover, a base rail having a hat-shaped cross section is used as a base, an open side of the hat shape of the base rail is facing upward, brim-shaped flat plate portions on both sides of the hat shape of the base rail serve as the base face, and the front bracket is fixed so as to overlap the brim-shaped flat plate portions on both sides of the hat shape on the open side of the hat shape of the base rail.

A rear bracket that is fixed onto the base face so as to be spaced apart from the front bracket, and a vertical bar that connects and joins the mounting bar to the rear bracket are provided.

In a solar cell system of the present invention, a plurality of the structure installation stands of the present invention are arranged side by side, and a solar cell module is mounted on the structure installation stands.

For example, two base rails each having a hat-shaped cross section are fixed parallel to each other, with an open side of the hat shape of the base rails facing upward, and brim-shaped flat plate portions on both sides of the hat shape of the base rails serve as a base face, the front bracket of each of the structure installation stands is fixed so as to overlap the brim-shaped flat plate portions on both sides of the hat shape of one of the base rails, the rear bracket of each of the structure installation stands is fixed so as to overlap the brim-shaped flat plate portions on both sides of the hat shape of the other base rail, and the front end portion of the inclined mounting bar of each of the structure installation stands is fastened to the front bracket, and the vertical bar is inserted and fixed between the inclined mounting bar and the rear bracket of each of the structure installation stands.

### Effects of the Invention

In the structure installation stand of the present invention, the front end portion of the inclined mounting bar is fixed to the front bracket. The edge portion on the inclined lower side of the structure mounted on the inclined mounting bar abuts against the abutting portion of the front bracket. Accordingly, the load exerted on the mounting bar is received not only by a fixed portion where the front end portion of the mounting bar is fixed to the front bracket, but also by the abutting portion of the front bracket against which the edge portion of the inclined lower side of the structure abuts, and thus the load is dispersively received at a plurality of locations, namely, at the fixed portion and the abutting portion. Accordingly, compared with a case where the entire load exerted on the mounting bar is received at only one location of the fixed portion where the front end portion of the mounting bar is fixed to the front bracket, the load bearing of the site where the mounting bar and the front bracket are joined improves. Moreover, the number of components and the number of assembly steps will not increase.

Since the abutting portion of the front bracket also has a function as a stopper that prevents the mounting bar and the structure from moving, it is not necessary to provide a stopper separately, which also prevents the number of components and the number of assembly steps from increasing.

For example, the front bracket has a bottom portion that abuts against the base face, and a side wall portion that is arranged upright from the bottom portion, the side wall portion is fastened to the front end portion of the inclined mounting bar, a front edge side of the side wall portion protrudes above the front end portion of the mounting bar so as to form the abutting portion, and the abutting portion abuts against the edge portion on the inclined lower side of the structure mounted on the mounting bar. Accordingly, the front bracket can be integrally provided with the abutting portion, which can prevent the number of components and the number of assembly steps from increasing.

The edge portion on the inclined lower side of the structure is positioned, by the abutting portion of the front bracket, so as to jut out beyond the bottom portion of the front bracket. In this case, even if rainwater runs along the bottom face of the structure and drops from the edge portion on the inclined lower side of the structure, this rainwater will not fall on the bottom portion of the front bracket, and thus the bottom portion of the front bracket will not easily corrode.

Furthermore, a base rail having a hat-shaped cross section is used as a base, an open side of the hat shape of the base rail is facing upward, brim-shaped flat plate portions on both sides of the hat shape of the base rail serve as the base face, and the front bracket is fixed so as to overlap the brim-shaped flat plate portions on both sides of the hat shape on the open side of the hat shape of the base rail. The base rail having a hat-shaped cross section originally has high strength against bending and does not easily deform, and thus is suitable as a base. Furthermore, if the front bracket is fixed so as to overlap the brim-shaped flat plate portions on both sides of the hat shape on the open side of the base rail, the opening portion of the hat shape is closed by the front bracket. Thus, the strength of the base rail against bending increases, and a more preferable base can be obtained.

The rear bracket that is fixed onto the base face so as to be spaced apart from the front bracket, and the vertical bar that connects and joins between the mounting bar and the rear bracket are provided, it is possible to constitute a stand having a triangular structure constituted by the mounting bar, the vertical bar, and the base face. In such a stand having a triangular structure, even if load is exerted on the mounting bar in any directions, such load can be dispersively received. Accordingly, even if the load of the structure itself and load due to wind pressure are exerted in a state in which a flat plate-like structure such as a solar cell module is mounted on the mounting bar and fixed, the stand can withstand such load.

The solar cell system of the present invention is a system in which a plurality of the structure installation stands of the present invention are arranged side by side, and a solar cell module is mounted on the structure installation stands, and thus equivalent effects as those of the above structure installation stand of the present invention can be achieved.

For example, two base rails each having a hat-shaped cross section are fixed parallel to each other, with an open side of the hat shape of the base rails facing upward, and brim-shaped flat plate portions on both sides of the hat shape of the base rails serve as a base face, the front bracket of each of the structure installation stands is fixed so as to overlap the brim-shaped flat plate portions on both sides of the hat shape of one of the base rails, the rear bracket of each of the structure installation stands is fixed so as to overlap the brim-shaped flat plate portions on both sides of the hat shape of the other base rail, and the front end portion of the inclined mounting bar of each of the structure installation stands is fastened to the front bracket, and the vertical bar is inserted and fixed between the inclined mounting bar and the rear bracket of each of the structure installation stands. In this case, as described above, since the opening portion of the hat shape is closed by the front bracket, the strength of the base rail against bending increases, and a more preferable base can be obtained. Further, a stand having a triangular structure constituted by the mounting bar, the vertical bar, and the base face is constituted, and the load bearing of the stand improves.

### Brief Description of Drawings

[FIG. 1] FIG. 1 is a perspective view showing a solar cell system that uses one embodiment of a structure installation stand of the present invention.
[FIG. 2] FIG. 2 is a lateral view showing the structure installation stand according to the present embodiment.
[FIG. 3] FIG. 3 is a lateral view showing a joining structure for joining a front bracket to a front end portion of a mounting bar in the structure installation stand in FIG. 2.
[FIG. 4A] FIG. 4A is a perspective view showing the front bracket.
[FIG. 4B] FIG. 4B is a lateral view showing the front bracket.
[FIG. 4C] FIG. 4C is a front view showing the front bracket.
[FIG. 5A] FIG. 5A is a lateral view showing the periphery of the front bracket when the inclination angle of a solar cell module and the mounting bar is set to 30°.
[FIG. 5B] FIG. 5B is a lateral view showing the periphery of the front bracket when the inclination angle of the solar cell module and the mounting bar is set to 10°.
[FIG. 5C] FIG. 5C is a lateral view showing the periphery of the front bracket when the inclination angle of the solar cell module and the mounting bar is set to 45°.
[FIG. 6A] FIG. 6A is a perspective view showing the periphery of the front bracket when the inclination angle of the solar cell module and the mounting bar is set to 30°.
[FIG. 6B] FIG. 6B is a perspective view showing the periphery of the front bracket when the inclination angle of the solar cell module and the mounting bar is set to 10°.
[FIG. 6C] FIG. 6C is a perspective view showing the periphery of the front bracket when the inclination angle of the solar cell module and the mounting bar is set to 45°.
[FIG. 7] FIG. 7 is a perspective view showing a joining structure for joining a rear bracket to a lower end portion of a vertical bar in the structure installation stand in FIG. 2.
[FIG. 8] FIG. 8 is a lateral view showing the joining structure in FIG. 7.
[FIG. 9] FIG. 9 is a diagram showing a step of installing the front bracket and the rear bracket in the solar cell system in FIG. 1.
[FIG. 10] FIG. 10 is a diagram showing a step of attaching the vertical bars in the solar cell system in FIG. 1.
[FIG. 11] FIG. 11 is a diagram showing a step of attaching braces to the vertical bars in FIG. 10.
[FIG. 12] FIG. 12 is a diagram showing a step of attaching the mounting bar in the solar cell system in FIG. 1.
[FIG. 13] FIG. 13 is a diagram showing a condition in which the positions of the mounting bar and the vertical bar in the solar cell system in FIG. 1 are adjusted.
[FIG. 14] FIG. 14 is a perspective view showing a state in which a plurality of the structure installation stands are arranged side by side.
[FIG. 15] FIG. 15 is a perspective view showing the three structure installation stands arranged side by side on two base rails.
[FIG. 16] FIG. 16 is a front view showing the three structure installation stands arranged side by side on the two base rails.
[FIG. 17] FIG. 17 is a cross-sectional view showing an enlarged frame member of the solar cell module in FIG. 1.
[FIG. 18A] FIG. 18A is a perspective view showing a state in which edge portions of the two solar cell modules, one on the right and the other on the left, are mounted and attached onto the mounting bar of the center structure installation stand in the solar cell system in FIG. 1 as viewed from above.
[FIG. 18B] FIG. 18B is a perspective view showing the state in FIG. 18A as viewed from below.
[FIG. 19] FIG. 19 is a cross-sectional view showing the state in FIG. 18A.
[FIG. 20] FIG. 20 is a perspective view showing the mounting bar in the structure installation stand in FIG. 2.
[FIG. 21] FIG. 21 is a perspective view showing an upper fixing fitting in the structure installation stand in FIG. 2.
[FIG. 22] FIG. 22 is a perspective view showing a lower fixing fitting in the structure installation stand in FIG. 2.
[FIG. 23] FIG. 23 is a plan view showing a state in which the lower fixing fitting in the structure installation stand in FIG. 2 is bent.
[FIG. 24] FIG. 24 is a perspective view showing the state in which the lower fixing fitting in the structure installation stand in FIG. 2 is bent as viewed from the surface side.
[FIG. 25] FIG. 25 is a perspective view showing the state in which the lower fixing fitting in the structure installation stand in FIG. 2 is bent as viewed from the undersurface side.
[FIG. 26] FIG. 26 is a perspective view showing a state in which the lower fixing fitting and the upper fixing fitting in the structure installation stand in FIG. 2 are attached to the mounting bar.
[FIG. 27] FIG. 27 is a perspective view showing a process for attaching the lower fixing fitting to the mounting bar in the structure installation stand in FIG. 2.
[FIG. 28] FIG. 28 is a perspective view showing a process subsequent to the process in FIG. 27.
[FIG. 29] FIG. 29 is a perspective view showing a process subsequent to the process in FIG. 28.
[FIG. 30] FIG. 30 is a perspective view showing a process subsequent to the process in FIG. 29.
[FIG. 31] FIG. 31 is a cross-sectional view showing an attachment structure for attaching the edge portion of the solar cell module to the stand unit on the left or right side in the solar cell system in FIG. 1.
[FIG. 32] FIG. 32 is a perspective view showing the upper fixing fitting used in the attachment structure in FIG. 31.
[FIG. 33A] FIG. 33A is a plan view schematically showing another example of a solar cell system using the structure installation stand according to the present embodiment.
[FIG. 33B] FIG. 33B is a front view of the solar cell system in FIG. 33A.
[FIG. 33C] FIG. 33C is a lateral view of the solar cell system in FIG. 33A.
[FIG. 34A] FIG. 34A is a plan view showing a stake in the solar cell system in FIG. 33A.
[FIG. 34B] FIG. 34B is a lateral view showing the stake in the solar cell system in FIG. 33A.
[FIG. 35A] FIG. 35A is a plan view showing short base rails that are arranged and connected in order to form a long base rail in the solar cell system in FIG. 33A.
[FIG. 35B] FIG. 35B is a lateral view of the short base rails in FIG. 35A.
[FIG. 35C] FIG. 35C is a cross-sectional view showing the short base rails in FIG. 35A.
[FIG. 36A] FIG. 36A is a plan view showing a base rail connecting member used for connecting the short base rails in FIG. 35A.
[FIG. 36B] FIG. 36B is a cross-sectional view of the base rail connecting member in FIG. 36A.
[FIG. 37A] FIG. 37A is a plan view showing a state in which the short base rails in FIG. 35A are connected.
[FIG. 37B] FIG. 37B is a lateral view showing the state in which the short base rails in FIG. 35A are connected.
[FIG. 38] FIG. 38 is a plan view showing the enlarged periphery of a location at which the short base rails are connected in FIG. 37A.
[FIG. 39] FIG. 39 is a lateral view showing the enlarged periphery of the location at which the short base rails are connected in FIG. 37A.
[FIG. 40A] FIG. 40A is a diagram illustrating a construction process for constructing the solar cell system in FIG. 33.
[FIG. 40B] FIG. 40B is a diagram illustrating the construction process subsequent to the process in FIG. 40A.
[FIG. 40C] FIG. 40C is a diagram illustrating the construction process subsequent to the process in FIG. 40B.
[FIG. 40D] FIG. 40D is a diagram illustrating the construction process subsequent to the process in FIG. 40C.
[FIG. 40E] FIG. 40E is a diagram illustrating the construction process subsequent to the process in FIG. 40D.
[FIG. 40F] FIG. 40F is a diagram illustrating the construction process subsequent to the process in FIG. 40E.
[FIG. 41] FIG. 41 is a perspective view showing a schematic configuration of a conventional stand.

### Embodiments of the Invention

The following is a detailed description of an embodiment of the present invention with reference to the accompanying drawings.

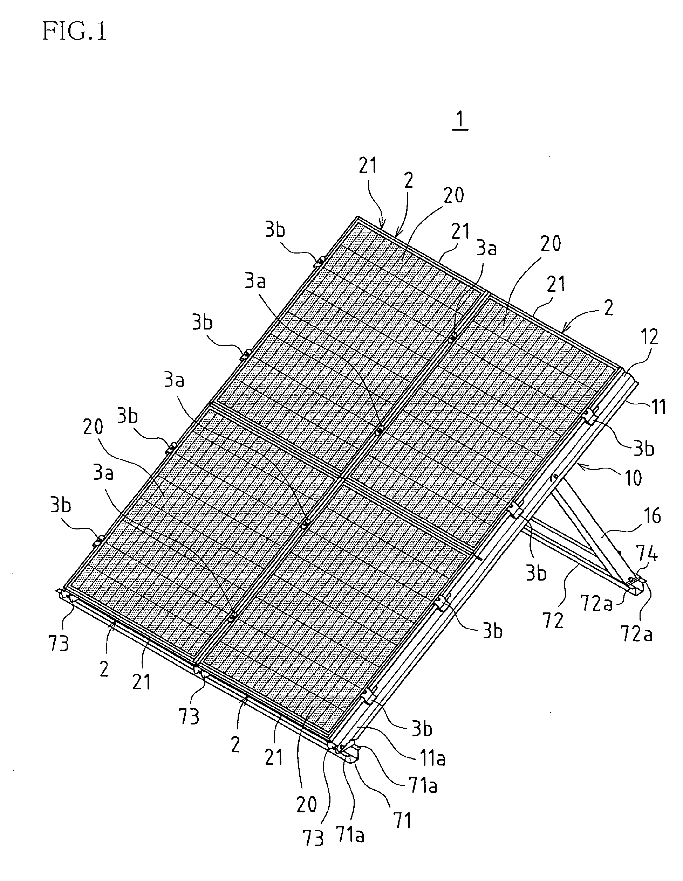

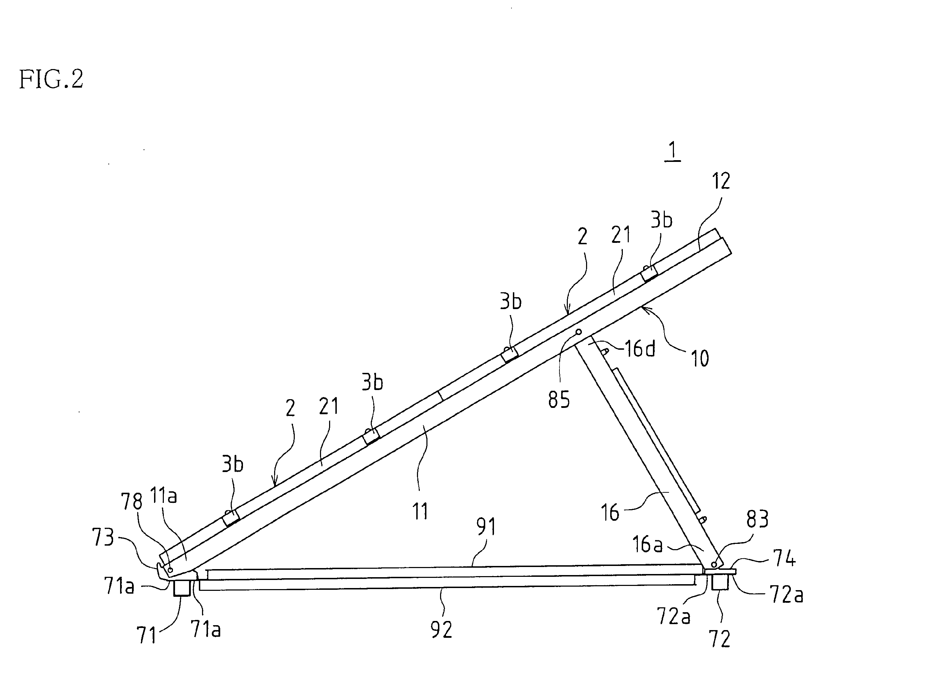

FIG. 1 is a perspective view showing a solar cell system that uses one embodiment of a structure installation stand of the present invention. FIG. 2 is a lateral view showing the structure installation stand according to the present embodiment.

As shown in FIG. 1, in a solar cell system 1, two base rails 71 and 72 are fixed on a flat roof or the like, three structure installation stands 10 are arranged side by side on the base rails 71 and 72, and four solar cell modules 2 are mounted and fixed onto the structure installation stands 10.

The base rails 71 and 72 each have a hat-shaped cross section, and with the open side of the hat shape disposed facing upward, the base rails 71 and 72 are fixed on a flat roof or the like so as to be parallel to each other having a constant interval therebetween. Brim-shaped flat plate portions 71a and 72a on both sides of the hat shape of the base rails 71 and 72 are positioned on the same two-dimensional plane, and the brim-shaped flat plate portions 71a and 72a of the base rails 71 and 72 form a flat base face. The structure installation stand 10 is mounted and fixed on the brim-shaped flat plate portions 71a and 72a of the base rails 71 and 72, in other words, the flat base face.

The solar cell module 2 is provided with a solar cell panel 20 and a frame member 21 holding this solar cell panel 20.

The structure installation stand 10 has a mounting bar 11 and a vertical bar 16, and the front end of the vertical bar 16 inclined in the direction opposite to that of the mounting bar 11 is fixed at a location about one-quarter from the upper end of the obliquely inclined mounting bar 11.

The three structure installation stands 10 are arranged side by side at substantially the same intervals as the width of the solar cell modules 2. Two solar cell modules 2 are arranged and disposed, one above the other, between the mounting bar 11 of the left structure installation stand 10 and the mounting bar 11 of the center structure installation stand 10, and two solar cell modules 2 are arranged and disposed, one above the other, between the mounting bar 11 of the right structure installation stand 10 and the mounting bar 11 of the center structure installation stand 10. The edge portions of the four solar cell modules 2 in total are mounted and attached onto the mounting bars 11 of the structure installation stands 10.

Accordingly, the edge portions of the two solar cell modules 2, one above the other, are mounted on a top plate 12 of each of the mounting bars 11 of the left and right structure installation stands 10. Further, onto the top plate 12 of the mounting bar 11 of the center structure installation stand 10, the edge portions of the two solar cell modules 2, one above the other, are mounted on the right, and the edge portions of the two solar cell modules 2, one above the other, are mounted on the left.

The following is a detailed description of a configuration of the structure installation stand 10. In the structure installation stand 10, a front bracket 73 and a rear bracket 74 are respectively fixed to the brim-shaped flat plate portions 71a and 72a of the base rails 71 and 72, a front end portion 11a of the mounting bar 11 is joined and fixed to the front bracket 73, the lower end portion of the vertical bar 16 is joined to the rear bracket 74, and the vertical bar 16 is interposed between the rear bracket 74 and a location about one-quarter from the upper end of the mounting bar 11 and fixed.

The mounting bar 11 has a substantially U-shaped cross section only at the front end portion 11a thereof, and has a hat-shaped cross section over the area from the vicinity of the front end portion 11a to the rear end. The vertical bar 16 has a substantially U-shaped cross section only at the upper end portion thereof, and has a hat-shaped cross section over the area from the vicinity of the upper end portion to the lower end. Note that in this specification, a substantially U shape is assumed to include a square U shape.

The front bracket 73, the rear bracket 74, the mounting bar 11, and the vertical bar 16 are all formed by performing cutting and bending processes on a metal plate such as a plated steel plate.

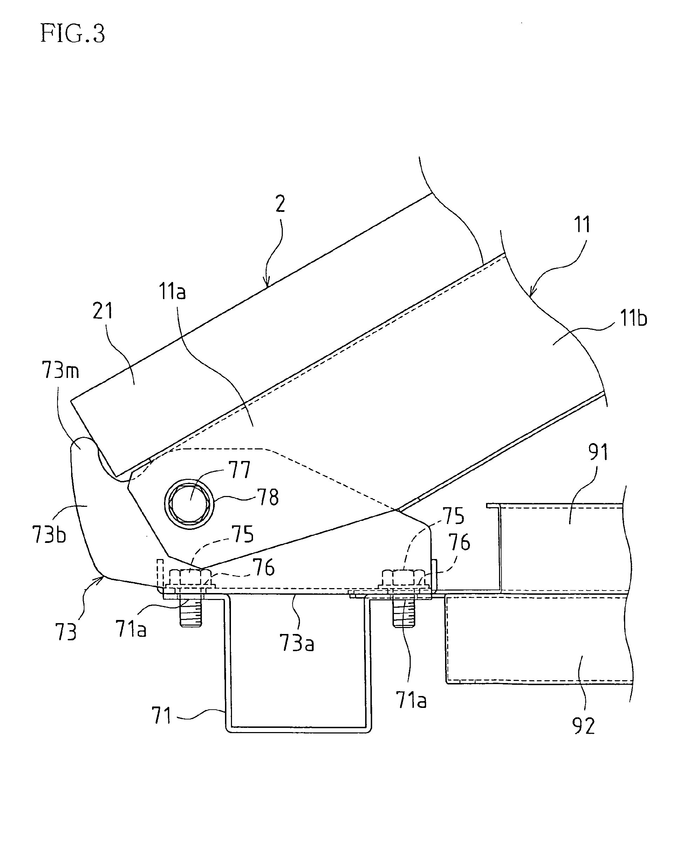

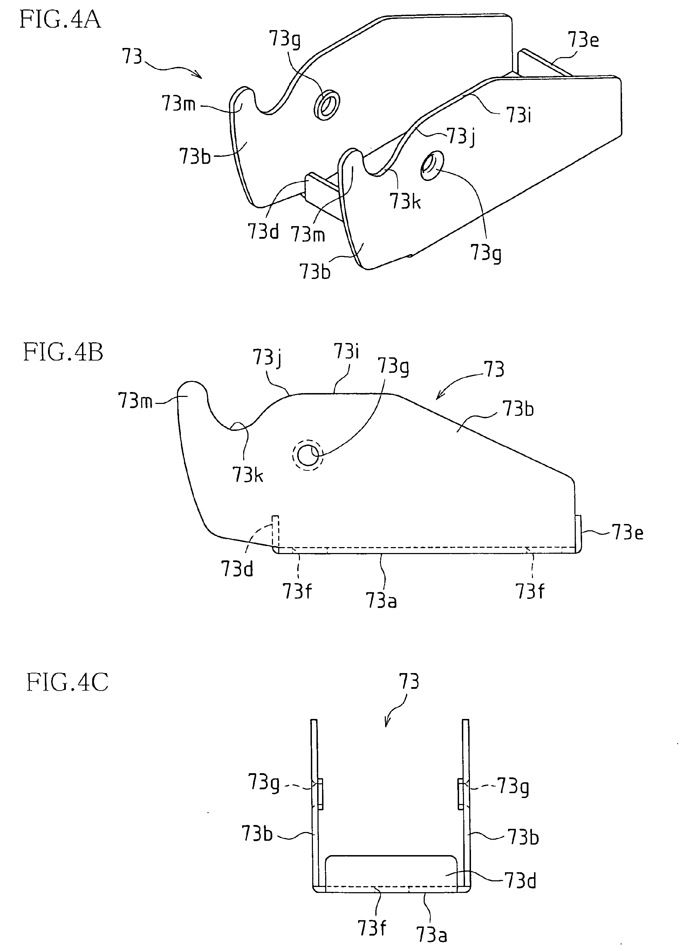

FIG. 3 is a lateral view showing a joining structure for joining the front bracket 73 to the front end portion 11a of the mounting bar 11. Further, FIGS. 4A, 4B, and 4C are a perspective view, a lateral view, and a front view showing the front bracket 73.

The front bracket 73 has a bottom plate 73a, side plates 73b arranged upright by being bent on both sides of the bottom plate 73a, and reinforcing portions 73d and 73e arranged to stand by being bent at the front and rear of the bottom plate 73a. Two holes 73f are formed in the bottom plate 73a of the front bracket 73, and a screw hole 73g is formed in each of the side plates 73b.

The upper side edges of the side plates 73b each form a curved line. A top portion 73i, a shoulder portion 73j, and a valley portion 73k are formed at the upper side edge, and a curved abutting portion 73m protruding upward on the frontmost end side is further formed. The abutting portions 73m of the side plates 73b abut against the edge portion on the inclined lower side of the frame member 21 of the solar cell module 2, and receive the load of the solar cell module 2. Accordingly, the abutting portions 73m of the side plates 73b are each formed into a wide shape so as to have sufficient strength, and have a smoothly curved outer edge so as to prevent insufficient strength from locally occurring.

The front bracket 73 as described is mounted so as to span the brim-shaped flat plate portions 71a of the base rail 71. Two bolts 75 are put though respective washers 76, and further screwed into screw holes in the brim-shaped flat plate portions 71a of the base rail 71 through the respective holes 73f in the bottom plate 73a of the front bracket 73, thereby fixing the front bracket 73 onto the base face.

The base rail 71 has high strength against bending and does not readily deform since the cross section thereof has a hat shape. Moreover, the front bracket 73 is fixed so as to overlap the brim-shaped flat plate portions 71a on both sides of the hat shape on the open side of the hat shape of the base rail 71, and the opening portion of the hat shape is closed by the front bracket 73. Thus, the strength of the base rail 71 against bending is increased, and the strength of the base face is extremely increased, thereby achieving a more preferable base structure.

The front end portion 11a of the mounting bar 11 has a substantially U-shaped cross section, the inner width between side plates 11b of the front end portion 11a is set to the same width as the outer width between the side plates 73b of the front bracket 73 or a width slightly wider than that outer width. The side plates 73b of the front bracket 73 are sandwiched inside the side plates 11b of the front end portion 11a, and the side plates 11b of the front end portion 11a overlap the side plates 73b of the front bracket 73.

Then, two bolts 77 are put into respective washers 78, further screwed into the screw holes 73g in the side plates 73b of the front bracket 73 through holes (not shown) in the side plates 11b of the front end portion 11a, and fastened. Accordingly, the front end portion 11a of the mounting bar 11 is joined and fixed to the front bracket 73.

Here, the mounting bar 11 is supported at an inclination relative to the base face in order to support the solar cell module 2 facing the sun. For this reason, if the solar cell module 2 is simply mounted on the mounting bar 11, the solar cell module 2 slides on the mounting bar 11, and it will be difficult to position the solar cell module 2.

However, the abutting portions 73m of the side plates 73b of the front bracket 73 abut against the frame member 21 of the solar cell module 2, and thus the solar cell module 2 does not slide on the mounting bar 11. The abutting portions 73m of the side plates 73b receive the solar cell module 2, thereby achieving the positioning thereof.

The load of the solar cell module 2 is received not only by the front end portion 11a of the mounting bar 11 and the bolts 77 that fasten the front bracket 73, but also by the abutting portions 73m of the front bracket 73 against which the frame member 21 of the solar cell module 2 abuts, and is dispersively received at two locations, namely, at the bolts 77 and the abutting portions 73m. Accordingly, compared with the case where all the load of the solar cell module 2 is received only at one location, namely, at the bolts 77, the load bearing of the site where the mounting bar 11 and the front bracket 73 are joined improves.

The solar cell module 2 is installed outdoors, and receives wind pressure in various directions, and thus force in various directions is exerted on the front end portion 11a of the mounting bar 11. Since the abutting portions 73m of the front bracket 73 particularly receive the force in the direction toward the inclined lower side of the solar cell module 2 (water flowing direction), the load bearing in the water flowing direction between the mounting bar 11 and the front bracket 73 is improved.

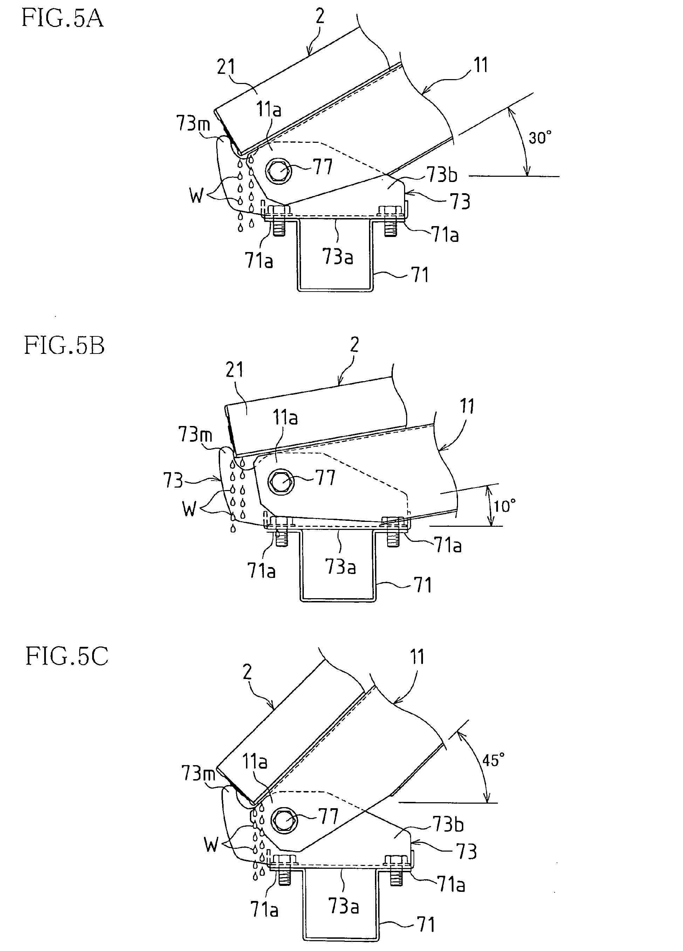

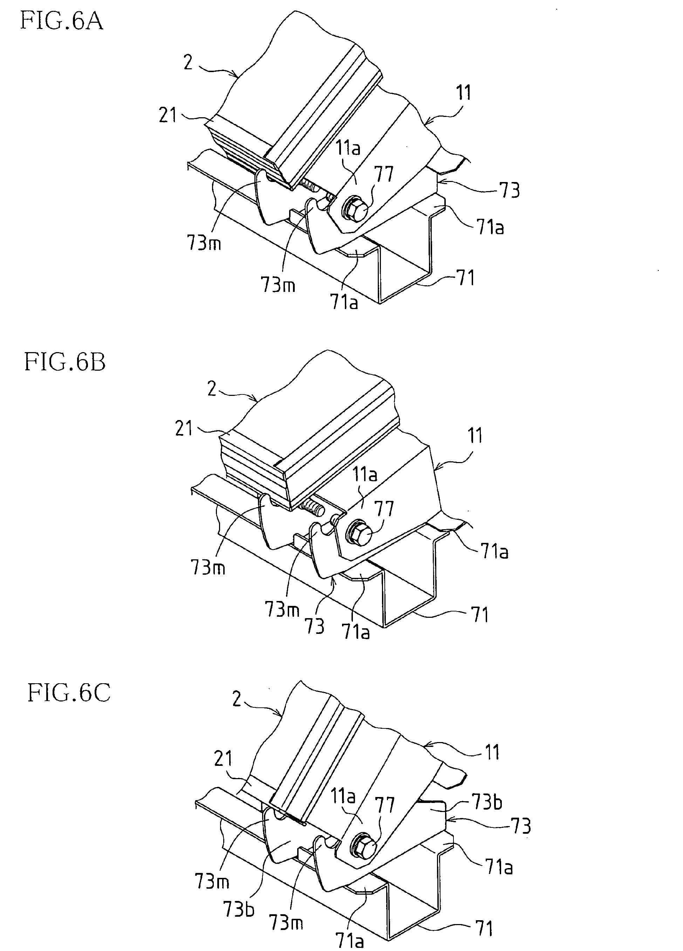

Moreover, as shown in FIGS. 5A and 6A, the abutting portions 73m of the front bracket 73 position the edge portion of the solar cell module 2 such that the edge portion juts out beyond the bottom plate 73a of the front bracket 73 toward the abutting portions 73m. Accordingly, even if rainwater infiltrates the space between the solar cell module 2 and the mounting bar 11, gradually runs along the bottom face of the solar cell module 2, and turns into waterdrops W, and then the waterdrops W drop from the edge portion of the solar cell module 2, the waterdrops W will not fall on the bottom plate 73a of the front bracket 73 and the base rail 71. In FIGS. 5A and 6A, although the inclination angle of the solar cell module 2 and the mounting bar 11 is 30°, as is clear from FIGS. 5B, 5C, 6B, and 6C, if the inclination angle is within the range of 10° to 45°, the abutting portions 73m of the front bracket 73 are positioned so as to be spaced apart from the bottom plate 73a and the base rail 71, the waterdrops W that have dropped from the edge portion of the solar cell module 2 will not fall on the bottom plate 73a of the front bracket 73 and the base rail 71. Accordingly, the bottom plate 73a of the front bracket 73 and the base rail 71 do not easily corrode.

Accordingly, the abutting portions 73m of the front bracket 73 achieve three functions at the same time, specifically, a function as a stopper for positioning the solar cell module 2, a function of improving the load bearing of the joining part between the mounting bar 11 and the front bracket 73, and a function of preventing waterdrops from falling on the bottom plate 73a of the front bracket 73 and the base rail 71. Moreover, the front bracket 73 is integrally provided with the abutting portions 73m, and thus the number of components and the number of assembly steps will not increase.

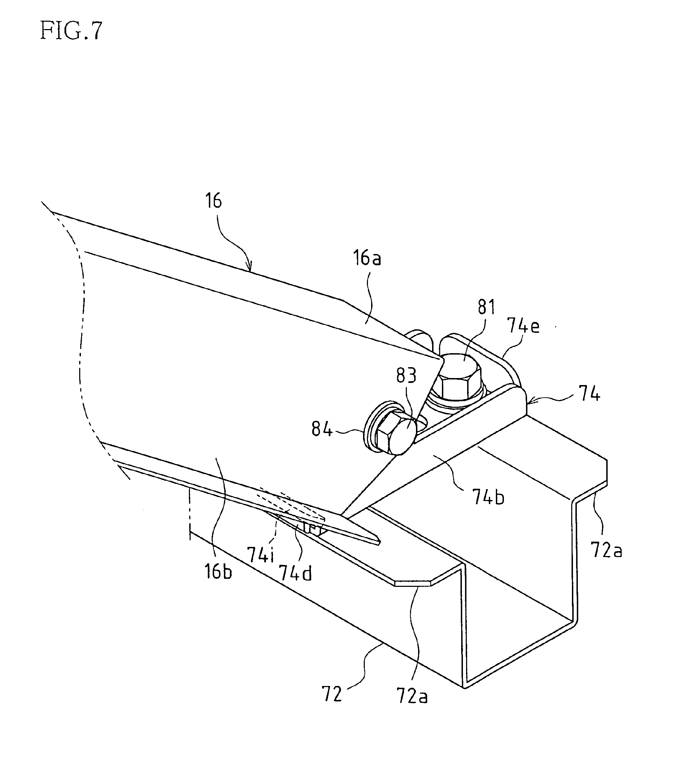

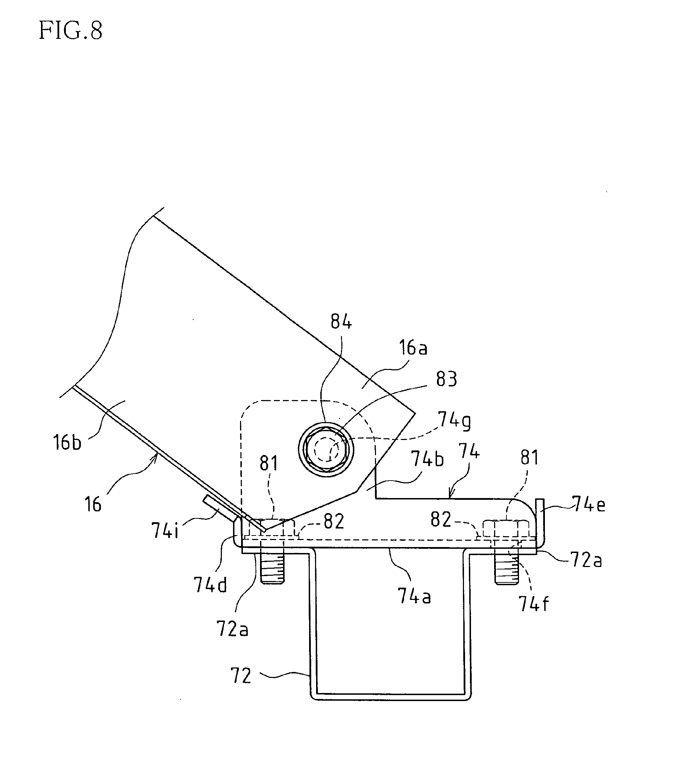

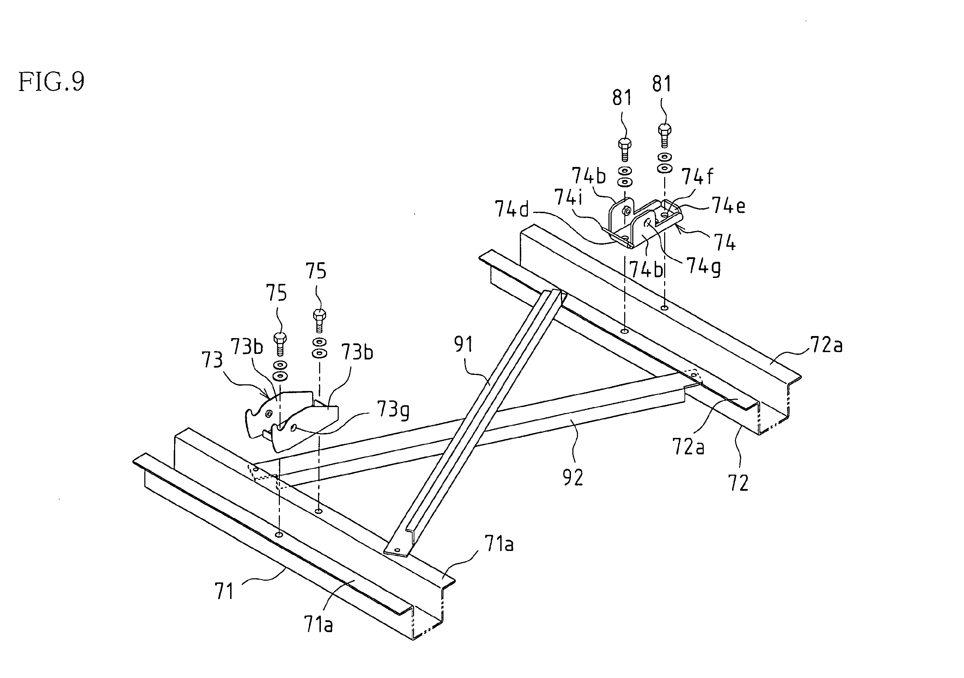

FIGS. 7 and 8 are a perspective view and a lateral view showing the joining structure for joining the rear bracket 74 to a lower end portion 16a of the vertical bar 16. FIG. 9 is a perspective view showing the rear bracket 74 and the like.

The rear bracket 74 has a bottom plate 74a, side plates 74b arranged upright by being bent on both sides of the bottom plate 74a, and reinforcing portions 74d and 74e arranged upright by being bent at the front and rear of the bottom plate 74a. Two holes 74f are formed in the bottom plate 74a of the rear bracket 74. The side plates 74b each have a screw hole 74g formed therein. Moreover, the front reinforcing portion 74d is obliquely bent at a certain position thereof, and the front edge side of the oblique portion serves as a receiving portion 74i.

In order to fix the rear bracket 74 onto the base face, the rear bracket 74 is mounted so as to span the brim-shaped flat plate portions 72a of the base rail 72, and two bolts 81 are put into respective washers 82, and further screwed into screw holes in the brim-shaped flat plate portions 72a of the base rail 72 through the holes 74f in the bottom plate 74a of the rear bracket 74.

As with the case of the front bracket 73, the rear bracket 74 closes the opening portion of the hat shape of the base rail 72, and thus the strength of the base rail 72 against bending increases, and the strength of the base structure increases.

The vertical bar 16 has a substantially U-shaped cross section only at the upper end portion thereof, and has a hat-shaped cross section over the area from the vicinity of the upper end portion to the lower end. As shown in FIGS. 7 and 8, the inner width between side plates 16b of the vertical bar 16 is set to the same width as the outer width between the side plates 74b of the rear bracket 74 or a width slightly wider than that outer width. At the lower end portion 16a of the vertical bar 16, the side plates 74b of the rear bracket 74 are sandwiched inside the side plates 16b, and the side plates 16b overlap the side plates 74b of the rear bracket 74. Further, the lower sides of the side plates 16b abut against the receiving portion 74i of the reinforcing portion 74d of the rear bracket 74.

In this state, two bolts 83 are put into respective washers 84, further screwed into the screw holes 74g in the side plates 74b of the rear bracket 74 through holes (not shown) in the side plates 16b of the vertical bar 16, and fastened. Accordingly, the lower end portion 16a of the vertical bar 16 is joined and fixed to the rear bracket 74.

At this time, at the lower end portion 16a of the vertical bar 16, the lower sides of the side plates 16b abut against the receiving portion 74i of the reinforcing portion 74d of the rear bracket 74 and are received thereby, and thus the vertical bar 16 is supported in an inclined state relative to the base face.

As shown in FIG. 2, an upper end portion 16d of the vertical bar 16 is inserted into the hat-shaped mounting bar 11 at a location about one-quarter from the upper end thereof. Two bolts 85 are screwed into screw holes in side walls of the vertical bar 16 through holes in side walls of the mounting bar 11 and fastened, thereby connecting and fixing the upper end portion 16d of the vertical bar 16 to the mounting bar 11.

Here, if a load is exerted from the mounting bar 11 onto the vertical bar 16, the force due to this load is received not only by the two bolts 83 that fasten the lower end portion 16a of the vertical bar 16 and the rear bracket 74, but also by the receiving portion 74i of the rear bracket 74 against which the lower sides of the side plates 16b of the vertical bar 16 abut. The force can be dispersively received at a plurality of locations, namely, at the two bolts 83 and the receiving portion 74i of the rear bracket 74. Accordingly, compared with the case where only the bolts receive the force exerted on the rear bracket 74, the load bearing of the site where the vertical bar 16 and the rear bracket 74 are joined improves. Moreover, the number of components and the number of assembly steps will not increase.

The receiving portion 74i of the rear bracket 74 receives the lower sides of the side plates 16b of the vertical bar 16 from below, and thus the vertical bar 16 is prevented from rotationally moving downward about the bolts 83. Accordingly, only by joining and fixing the lower end portion 16a of the vertical bar 16 to the rear bracket 74, the vertical bar 16 can be supported in the inclined state, and when the structure installation stand 10 having a triangular structure formed by the mounting bar 11, the vertical bar 16, and the base face is set up, the assembly work therefor will be easy.

When the structure installation stand 10 having such a configuration is viewed as a whole, the mounting bar 11, the vertical bar 16, and the base face are combined to form a triangular shape. In the stand 10 constituted to have a triangular shape, the force exerted on the mounting bar 11 can be dispersively received by the mounting bar 11, the vertical bar 16, and the base face, and thus the strength of this stand 10 increases. For example, the load of the solar cell module 2 mounted on the mounting bar 11, wind pressure applied to the solar cell module 2, and the like can be dispersively received by the mounting bar 11, the vertical bar 16, and the base face.

Further, the cross section of the mounting bar 11, the vertical bar 16, and the base rail 71 that forms the base face has a hat shape, which increases the strength of each of these members.

Moreover, in the present embodiment, as described above, the load bearing of the site where the mounting bar 11 and the front bracket 73 are joined is high, and the load bearing of the site where the vertical bar 16 and the rear bracket 74 are joined is also high. Thus, even if the load exerted on the structure installation stand 10 concentrates on the joining sites thereof, the joining sites can bear this load.

The following is a description of a method for assembling the structure installation stand 10 according to the present embodiment.

First, as shown in FIG. 9, the two base rails 71 and 72 having a hat-shaped cross section are fixed to a flat roof or the like so as to be parallel to each other with a constant interval therebetween, two braces 91 and 92 are extended aslant between the base rails 71 and 72 that form the flat base face using the brim-shaped flat plate portions 71a and 72a of the two base rails 71 and 72. Both ends of the braces 91 and 92 are fixed to the base rails 71 and 72 with bolts and nuts.

Then, the front bracket 73 is disposed on the brim-shaped flat plate portions 71a of the front base rail 71 so as to span the portions, and also the rear bracket 74 is disposed on the brim-shaped flat plate portions 72a of the rear base rail 72 so as to span the portions. One set of the front bracket 73 and the rear bracket 74 is arranged on a straight line orthogonal to the base rails 71 and 72, the front bracket 73 is fixed with the two bolts 75, and the rear bracket 74 is fixed with the two bolts 81 (see FIGS. 3 and 8 for details).

Three sets of the front bracket 73 and the rear bracket 74 are disposed at constant intervals along the base rails 71 and 72.

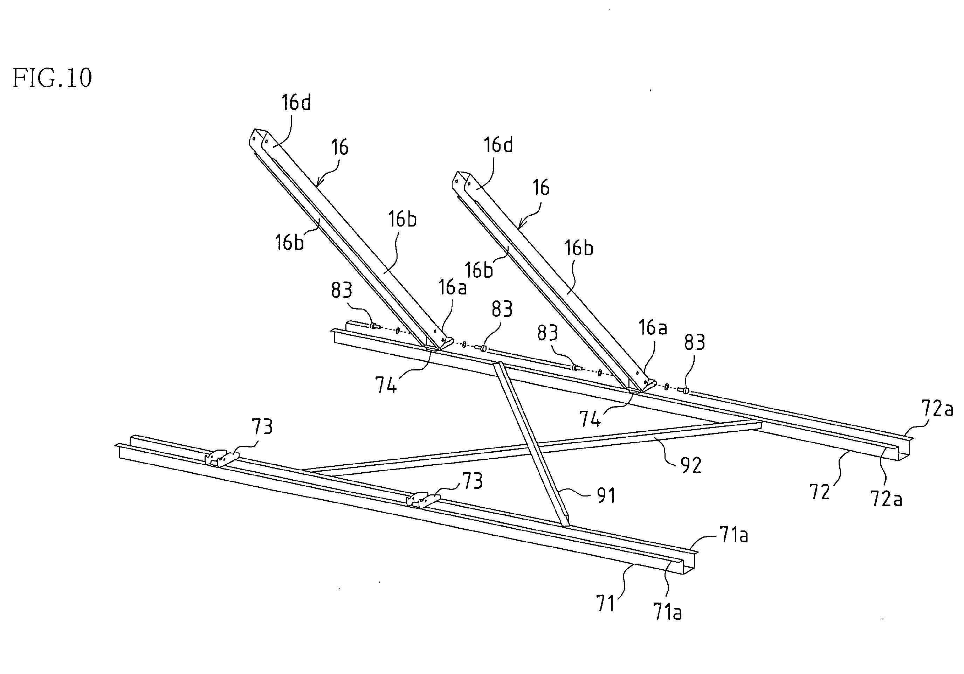

Subsequently, as shown in FIG. 10 (see FIGS. 7 and 8 for details), for each of the rear brackets 74, the side plates 74b of the rear bracket 74 are sandwiched inside the side plates 16b at the lower end portion 16a of the vertical bar 16, and the two bolts 83 are screwed into the screw holes 74g in the side plates 74b of the rear bracket 74 through holes in the side plates 16b of the vertical bar 16 and fastened, thereby joining and fixing the lower end portion 16a of the vertical bar 16 to the rear bracket 74. At this time, the lower sides of the side plates 16b of the vertical bar 16 abut against the receiving portion 74i of the rear bracket 74 and are received thereby, and thus the vertical bar 16 is supported in an inclined state relative to the base face.

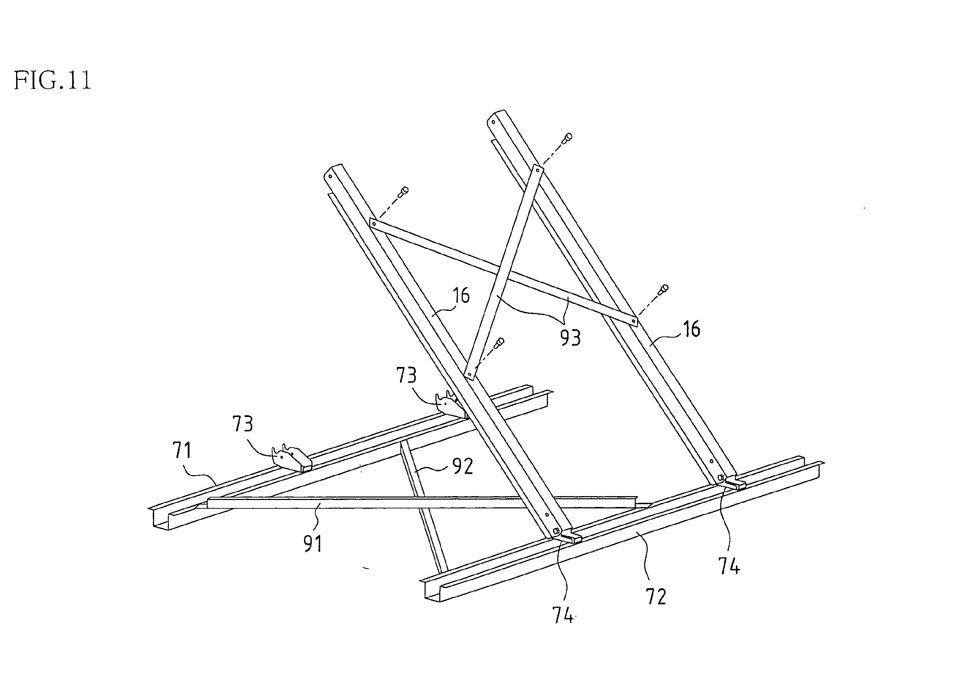

As shown in FIG. 11, two braces 93 are extended aslant between the two vertical bars 16 adjacent to each other, and both ends of the braces 93 are fixed to the vertical bars 16 with bolts and nuts.

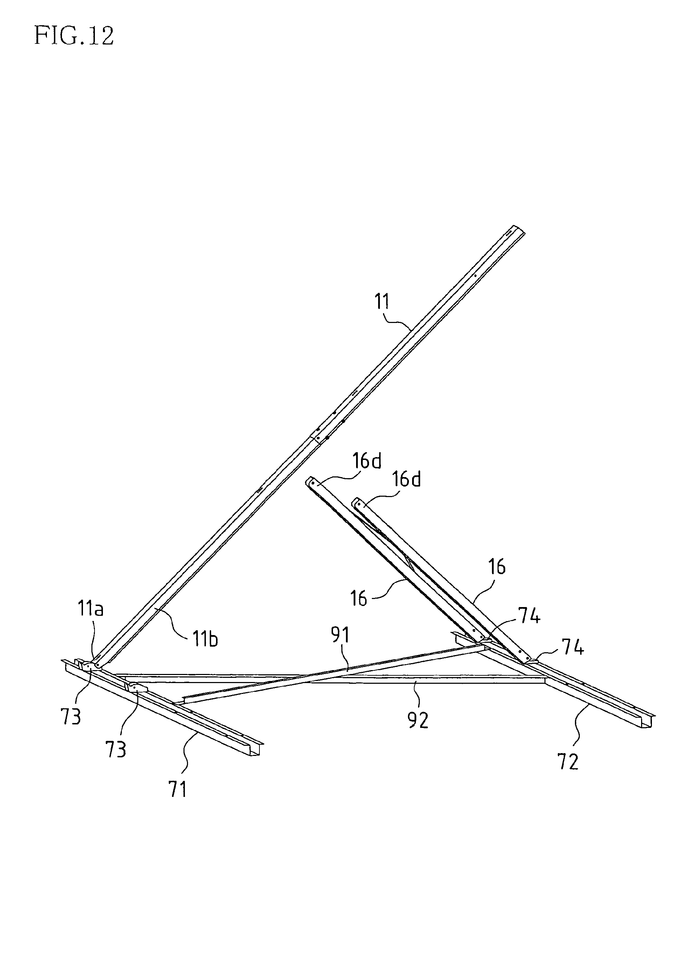

Next, as shown in FIG. 12 (see FIGS. 2 and 3 for details), the side plates 73b of the front bracket 73 are sandwiched inside the side plates 11b of the front end portion 11a of the mounting bar 11, and the two bolts 77 are screwed into the screw holes 73g in the side plates 73b of the front bracket 73 through holes in the side plates 11b of the front end portion 11a and fastened, thereby joining and fixing the front end portion 11a of the mounting bar 11 to the front bracket 73.

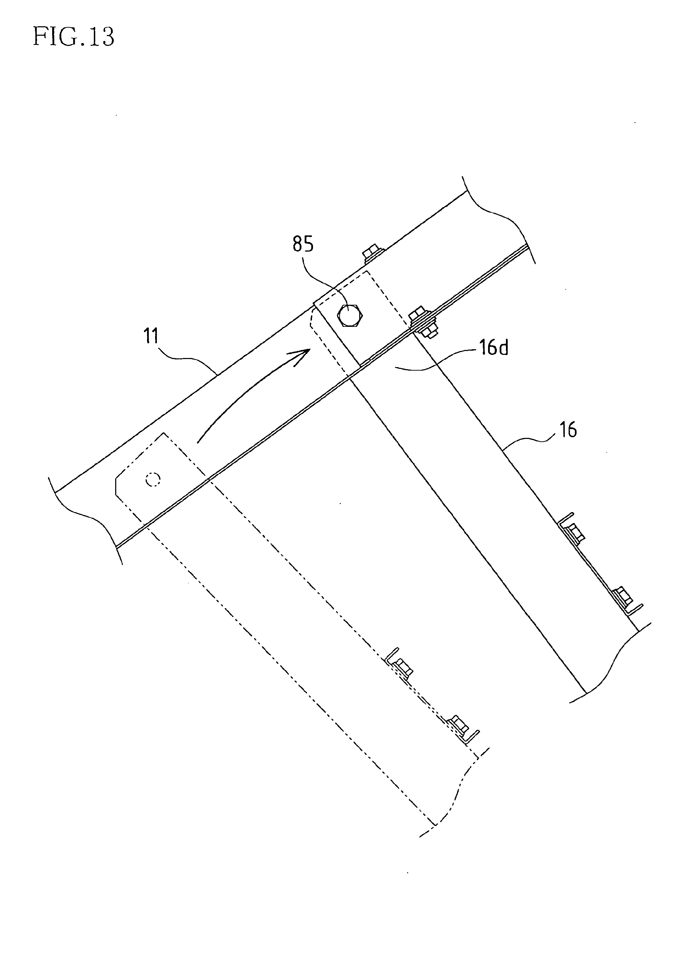

As shown in FIG. 13, the upper end portion 16d of the vertical bar 16 is inserted into the mounting bar 11 at a location about one-quarter from the upper end thereof, and the two bolts 85 are screwed into screw holes in the side walls of the vertical bar 16 through holes in the side walls of the mounting bar 11 and fastened, thereby connecting and fixing the upper end portion 16d of the vertical bar 16 to the mounting bar 11. At this time, since the vertical bar 16 is maintained in an inclined state, it is possible to easily adjust the positions of the mounting bar 11 and the upper end portion 16d of the vertical bar 16.

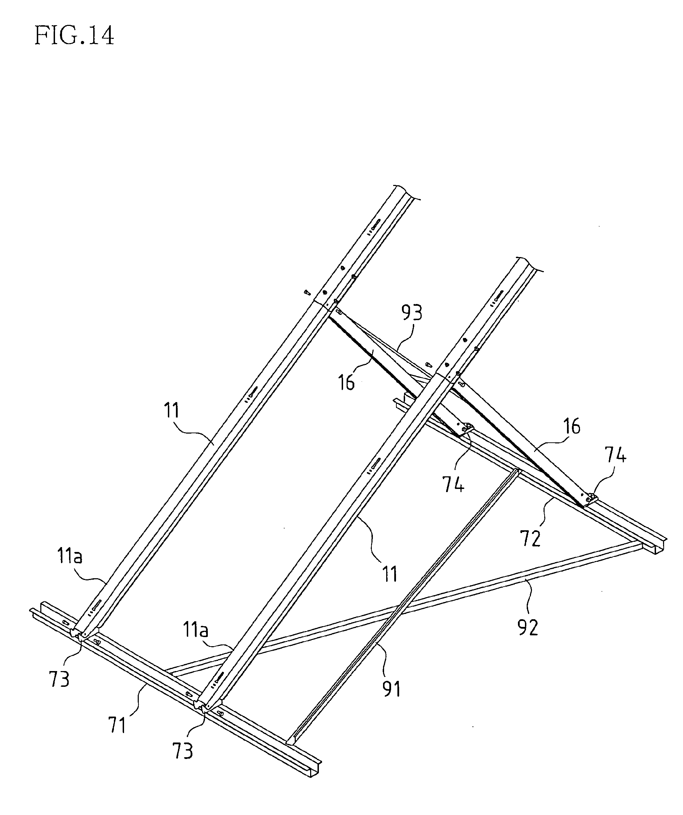

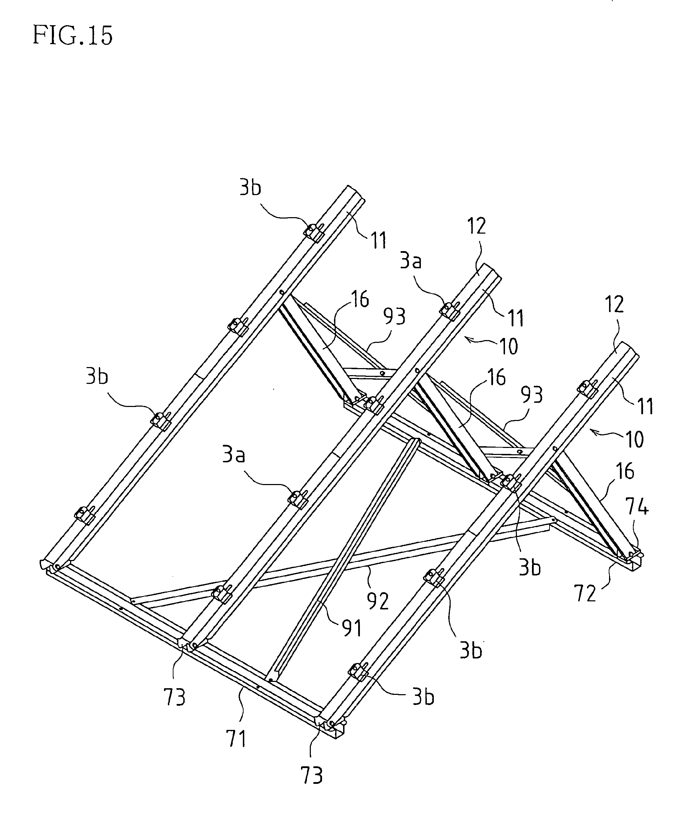

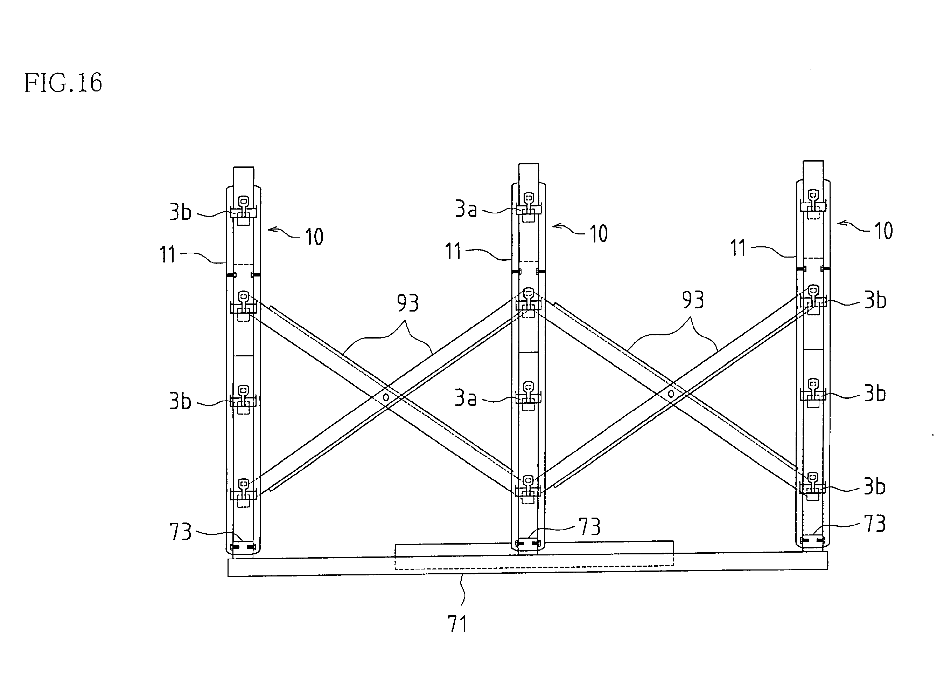

As shown in FIG. 14, for each of the front brackets 73, the front end portion 11a of the mounting bar 11 is joined and fixed to the front bracket 73. Accordingly, for each of the front brackets 73 and the rear brackets 74, the mounting bar 11 and the vertical bar 16 are combined to form a triangular shape, and the three structure installation stands 10 arranged side by side on the base rails 71 are completed as shown in FIGS. 15 and 16.

In the method for assembling the structure installation stand 10 as described, when the vertical bar 16 is joined and fixed to the rear bracket 74, the vertical bar 16 is supported in an inclined state, and thus a work process step is easy in which the upper end portion 16d of the vertical bar 16 is inserted into the mounting bar 11 at a location about one-quarter from the upper end thereof so as to be joined and fixed, which enables this work process step to be performed by one person. Also, other work process steps are not particularly difficult either, and thus can be performed by one person.

Moreover, each of the structure installation stands 10 has a triangular-shaped structure, and a plurality of braces are extended aslant between the structure installation stands 10 adjacent to each other. Thus, the strength as a whole greatly increases.

The following is a schematic description of an attachment structure for attaching the edge portion of the solar cell module 2 to the mounting bar 11 of the structure installation stand 10.

As shown in FIGS. 1 and 2, the edge portions of the two solar cell modules 2, one above the other, are mounted on the top plates 12 of the mounting bars 11 of the right and left structure installation stands 10. Further, onto the top plate 12 of the mounting bar 11 of the center structure installation stand 10, the edge portions of the two solar cell modules 2, one above the other, are mounted and attached on the right, and the edge portions of the two solar cell modules 2, one above the other, are mounted and attached on the left. Accordingly, the right and left structure installation stands 10 and the center structure installation stand 10 have different attachment structures for attaching the edge portion of the solar cell module 2, and there are two types of attachment structures. Thus, these attachment structures will be described separately.

First is a description of an attachment structure for attaching the edge portion of the solar cell module 2 to the center structure installation stand 10.

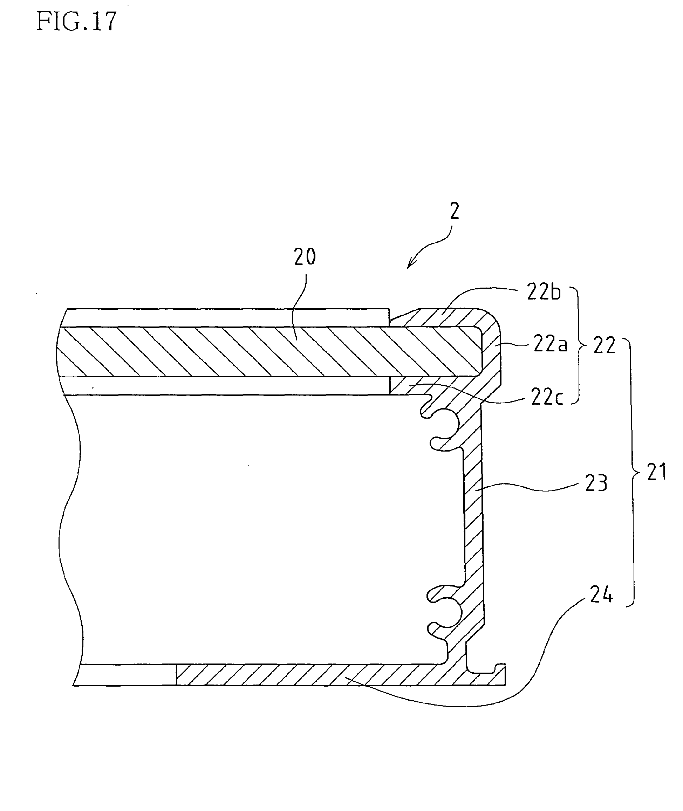

As shown in FIG. 17, the frame member 21 of the solar cell module 2 is constituted by a holding portion 22, a wall portion 23 extending downward from the holding portion 22, and a bottom piece 24 parallel to the solar cell panel 20 and connected to the lower edge of the wall portion 23.

The holding portion 22 has a holding wall 22a arranged upright, and an upper holding piece 22b and a lower holding piece 22c extending from the upper and lower edges of the holding wall 22a in the same lateral direction, and has a substantially U-shaped cross section. The edge portion of the solar cell panel 20 is sandwiched inside the substantially U shape.

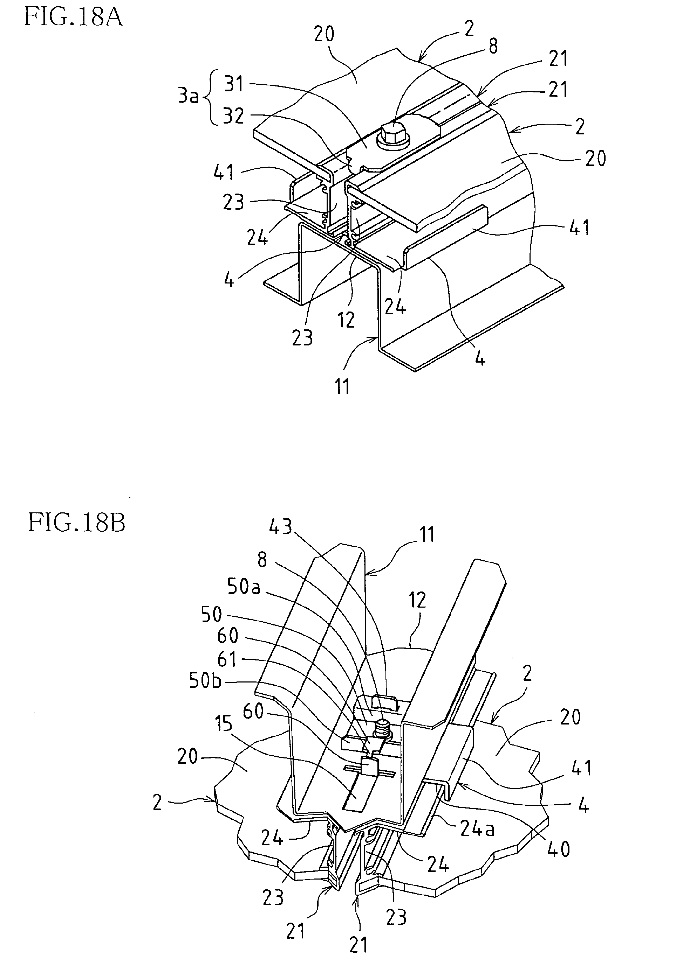

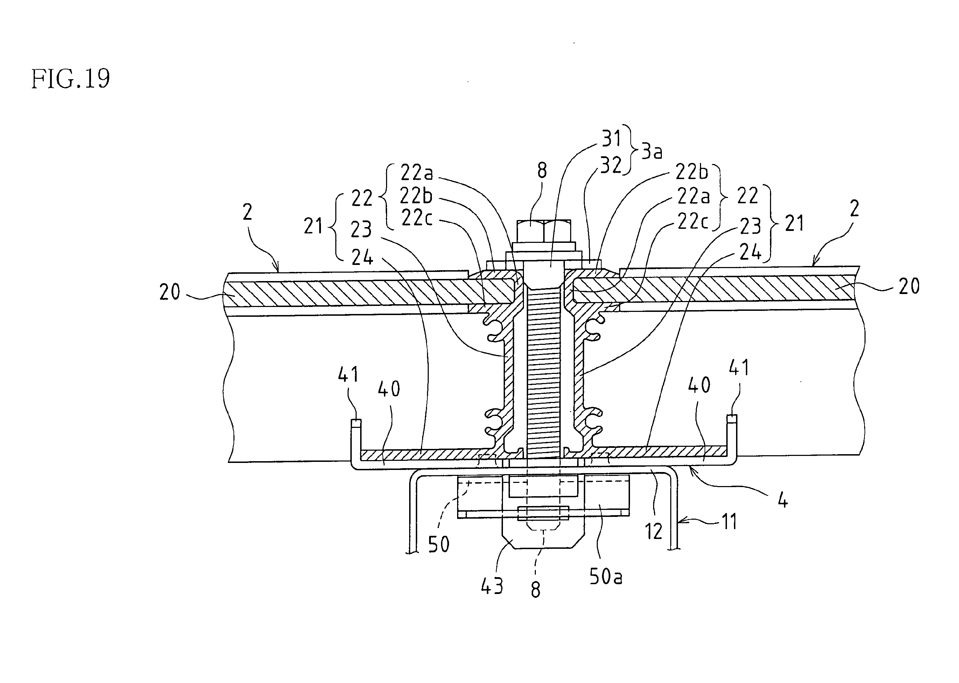

FIG. 18A is a perspective view showing the state in which the edge portions of the right and left solar cell modules 2 are mounted and attached to the mounting bar 11 of the center structure installation stand 10 as viewed from above, and FIG. 18B is a perspective view showing the same state as viewed from below. FIG. 19 is a cross-sectional view showing the same state.

As shown in FIGS. 18A, 18B, and 19, the right and left solar cell modules 2 are attached onto the top plate 12 of the mounting bar 11 of the center structure installation stand 10, using an upper fixing fitting 3a that abuts against the frame member 21 on the light-receiving face side of the solar cell module 2, a lower fixing fitting 4 that abuts against the frame member 21 on the opposite side to the light-receiving face of the solar cell module, and a bolt 8 serving as a fastening member.

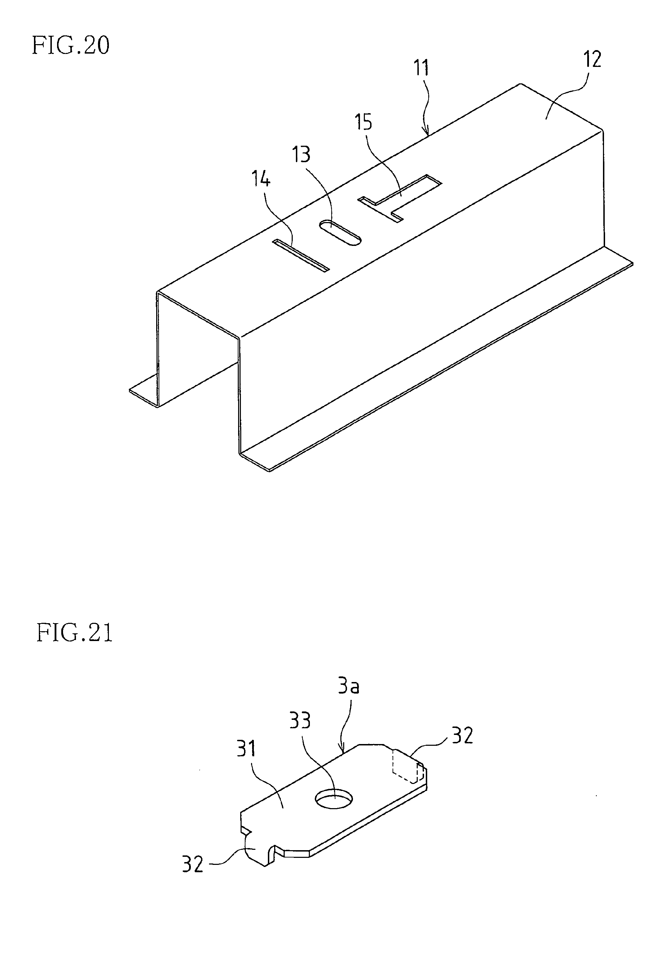

FIG. 20 is a perspective view showing the mounting bar 11 of the structure installation stand 10. As shown in FIG. 20, a top plate hole 13 into which the bolt 8 is inserted, and a T-shaped attachment aid hole 15 and a positioning slit 14 that are used for attaching the lower fixing fitting 4 are formed in the top plate 12 of the mounting bar 11.

The top plate hole 13 is a hole into which the bolt 8 is inserted, and is a long hole that is long and narrow in the right-left direction so as to allow fine adjustment of the insertion position of the bolt 8. The positioning slit 14 is a slit into which a positioning piece 43 of the lower fixing fitting 4 that will be described below is inserted, and is a long hole that is long and narrow in the right-left direction so as to allow fine adjustment of the insertion position of the positioning piece 43 of the lower fixing fitting 4.

FIG. 21 is a perspective view showing the upper fixing fitting 3a. As shown in FIG. 21, the upper fixing fitting 3a is formed to have protrusion pieces 32 protruding downward at both edge portions in the front-rear direction of a flat plate-like pressing plate 31 and a pressing plate hole 33 penetrating the pressing plate 31 in the center portion thereof.

The pressing plate 31 is used to press, from above, the frame members 21 of the two solar cell modules 2 disposed adjacent to each other on the top plate 12 of the mounting bar 11 of the structure installation stand 10. The pressing plate hole 33 is a hole into which the bolt 8 is inserted. The protrusion pieces 32 of the upper fixing fitting 3a are inserted into the space between the right and left solar cell modules 2.

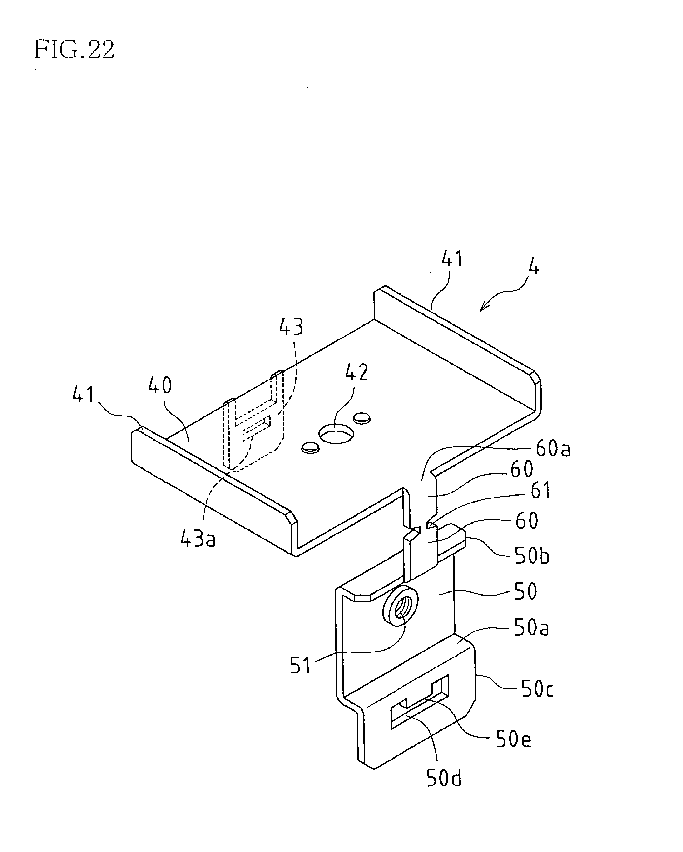

FIG. 22 is a perspective view showing the lower fixing fitting 4. As shown in FIG. 22, the lower fixing fitting 4 has an upper plate 40, a lower plate 50, and a joint portion 60 that joins the upper plate 40 and the lower plate 50. The joint portion 60 has, at a certain position thereof, a waist portion 61 provided so as to be capable of being easily bent.

In the lower plate 50, a lower plate rear wall 50b vertically bent from the rear edge of the lower plate 50 is formed, and a lower plate front wall 50a vertically bent from the front edge of the lower plate 50 is formed. Furthermore, an engaging piece 50c vertically bent from the edge of the lower plate front wall 50a is formed.

Claw pieces 41 bent upward are formed at the right and left edges of the upper plate 40. Also, the positioning piece 43 bent downward is formed at the rear edge of the upper plate 40. Furthermore, an engagement groove 43a is formed in the positioning piece 43.

Also, an upper plate hole 42 is formed through in the center portion of the upper plate 40, and a lower plate fastening hole 51 is formed in the lower plate 50. The upper plate hole 42 in the upper plate 40 is a hole into which the bolt 8 is inserted, and the lower plate fastening hole 51 in the lower plate 50 is a screw hole into which the bolt 8 serving as a fastening member is screwed.

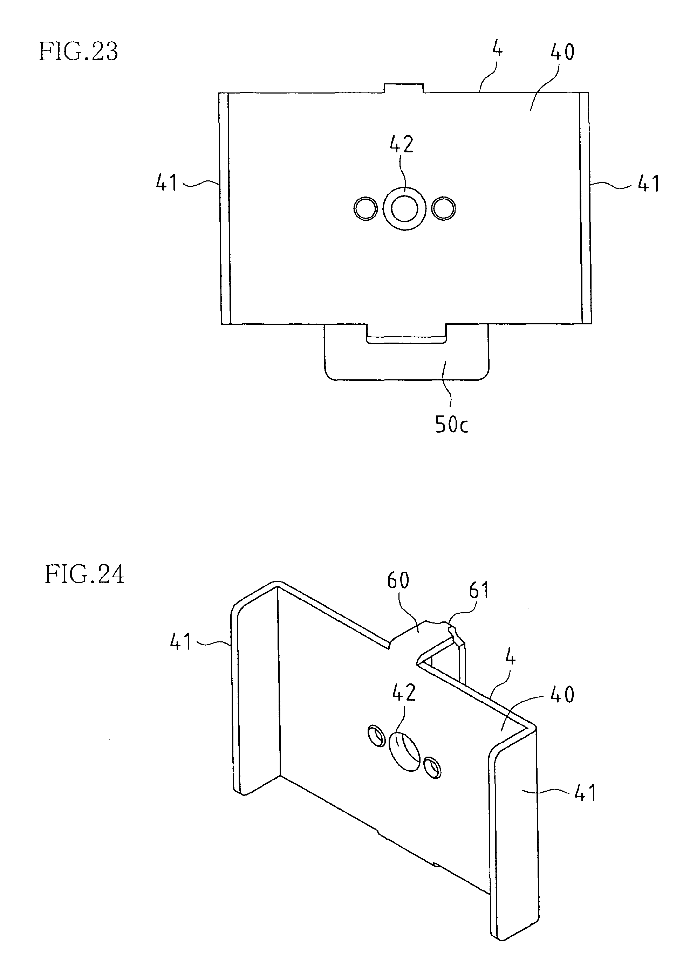

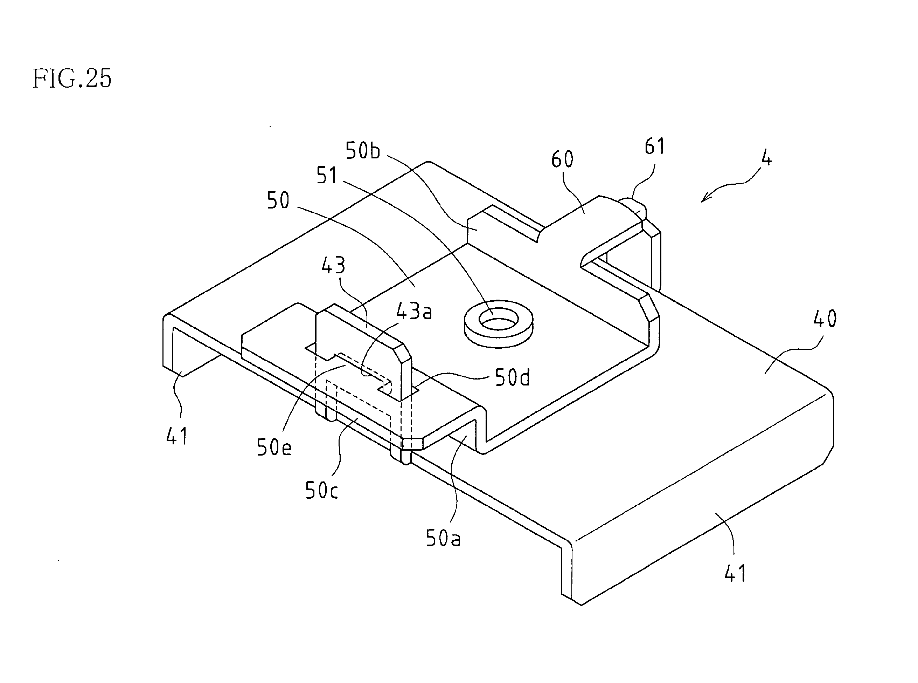

As shown in FIGS. 23 to 25, the joint portion 60 of the lower fixing fitting 4 is bent at the waist portion 61, and the upper plate 40 and the lower plate 50 are disposed facing each other with a gap therebetween. The positioning piece 43 of the upper plate 40 is fitted into a long hole 50d in the engaging piece 50c of the lower plate 50, and a protruding portion 50e of the engaging piece 50c is fitted into the engagement groove 43a in the positioning piece 43, whereby the upper plate 40 and the lower plate 50 are locked together.

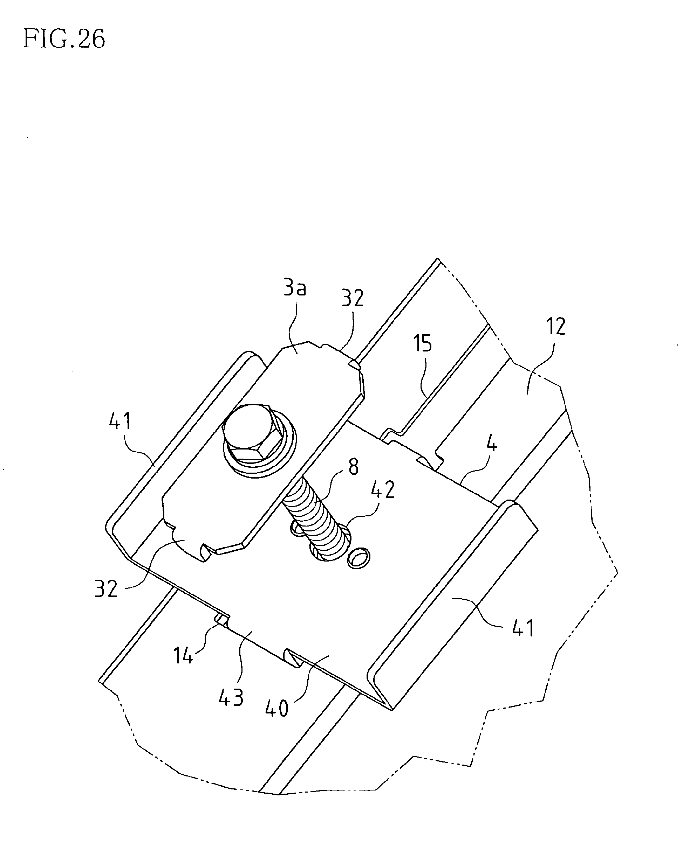

As shown in FIG. 26, the lower fixing fitting 4 is locked in the T-shaped attachment aid hole 15 and the positioning slit 14 in the top plate 12 of the mounting bar 11, with the waist portion 61 of the joint portion 60 being bent.

In the state in FIG. 26, the bolt 8 is inserted into the pressing plate hole 33 in the upper fixing fitting 3a and the upper plate hole 42 in the upper plate 40 of the lower fixing fitting 4, and then screwed into the lower plate fastening hole 51 in the lower plate 50 of the lower fixing fitting 4 through the top plate hole 13 in the top plate 12. In spaces on the lower plate 50 that are on the right and left of the bolt 8, the frame members 21 of the solar cell modules 2 are mounted one on the right and the other on the left, and the frame members 21 of the solar cell modules 2 are sandwiched between the lower plate 50 and the upper fixing fitting 3a.

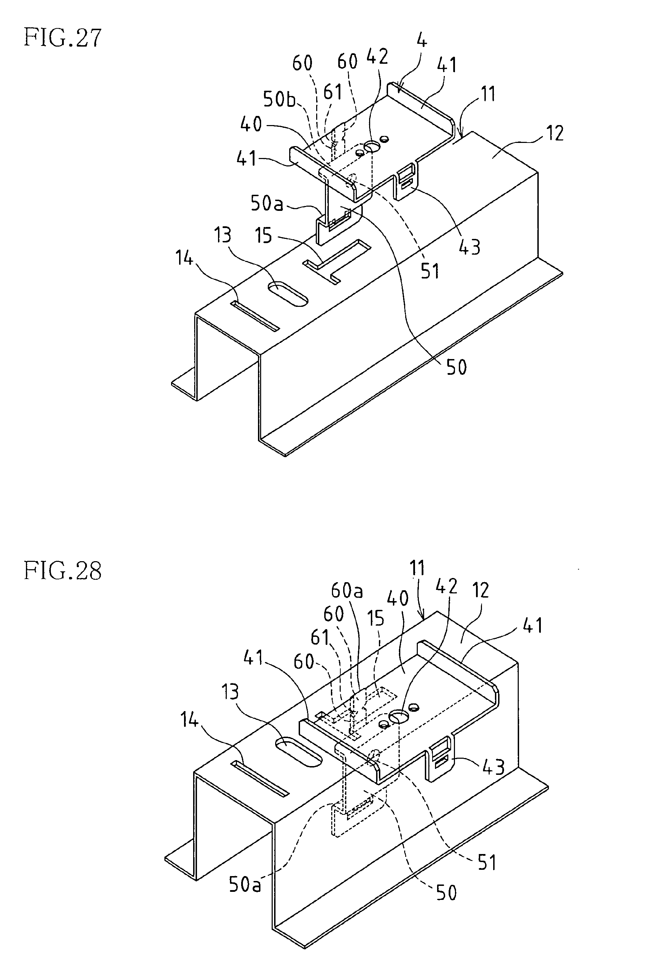

FIGS. 27 to 30 show processes for attaching the lower fixing fitting 4 to the top plate 12 of the mounting bar 11 of the structure installation stand 10.

First, as shown in FIG. 27, the claw pieces 41 of the lower plate 50 of the lower fixing fitting 4 are disposed orthogonal to the lengthwise direction of the top plate 12 of the mounting bar 11, and in that state, as shown in FIG. 28, the lower fixing fitting 4 is inserted into the attachment aid hole 15 up to the joint portion 60 of the lower fixing fitting 4.

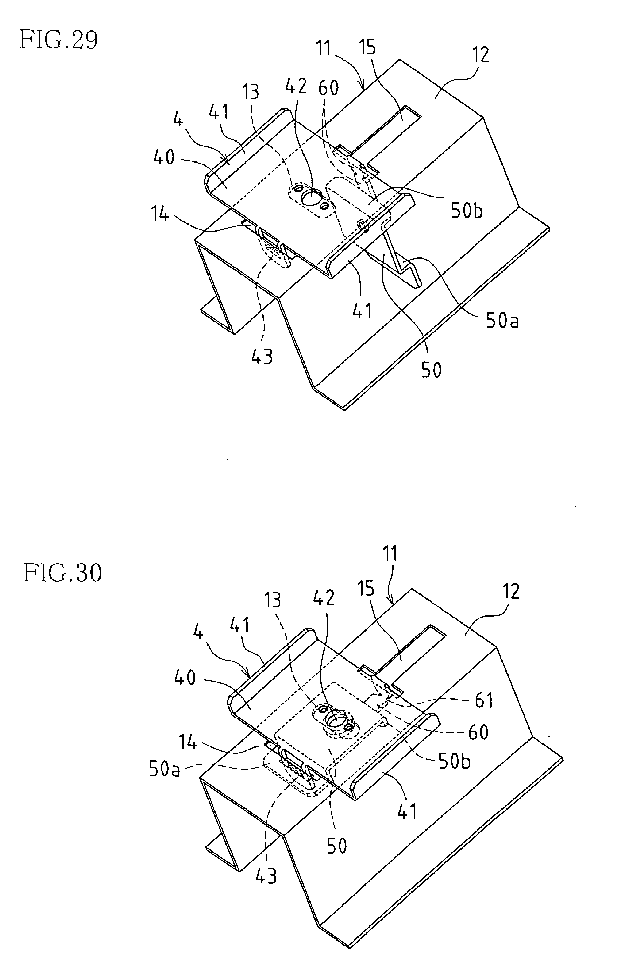

Then, as shown in FIG. 29, the entire lower fixing fitting 4 is rotated at right angles about the joint portion 60, and the positioning piece 43 of the lower fixing fitting 4 is inserted into the positioning slit 14 in the top plate 12 of the mounting bar 11, whereby the lower fixing fitting 4 is positioned in the front-rear direction.

Furthermore, as shown in FIG. 30, the waist portion 61 of the joint portion 60 of the lower fixing fitting 4 is bent 90 degrees, so as to bring the lower plate 50 and the upper plate 40 to face each other via the top plate 12, whereby the top plate 12 of the mounting bar 11 is sandwiched between the lower plate 50 and the upper plate 40, and the lower fixing fitting 4 is attached to the top plate 12. At this time, the positioning piece 43 of the upper plate 40 is fitted into the long hole 50d in the engaging piece 50c of the lower plate 50, and the protruding portion 50e of the engaging piece 50c is fitted into the engagement groove 43a in the positioning piece 43, whereby the upper plate 40 and the lower plate 50 are locked together.

In this way, in the state in which the lower fixing fitting 4 is attached to the top plate 12 in the manner described above, as shown in FIGS. 18A, 18B, and 19, the bottom piece 24 of the frame member 21 of the left solar cell module 2 is inserted and disposed in a space extending from approximately the center of the lower fixing fitting 4 to the claw piece 41 on the left, and the bottom piece 24 of the frame member 21 of the right solar cell module 2 is inserted and disposed in a space extending from approximately the center of the lower fixing fitting 4 to the claw piece 41 on the right. The upper fixing fitting 3a is mounted on the holding portions 22 of the frame members 21 of the solar cell modules 2, and the protrusion pieces 32 of the upper fixing fitting 3a are inserted into the space between the right and left solar cell modules 2. The bolt 8 is inserted into the pressing plate hole 33 in the upper fixing fitting 3a and the upper plate hole 42 in the upper plate 40, then screwed into the lower plate fastening hole 51 in the lower plate 50 through the top plate hole 13 in the top plate 12, and tightened, whereby the frame members 21 of the right and left solar cell modules 2 are fixedly supported in a sandwiched manner between the lower fixing fitting 4 and the upper fixing fitting 3a.

The following is a description of the attachment structure for attaching the edge portions of the solar cell modules 2 to the right and left structure installation stand 10. Note that the edge portions of the solar cell modules 2 attached to the right and left structure installation stand 10 are constituted as shown in FIG. 17, as with the edge portions attached to the center structure installation stand 10.

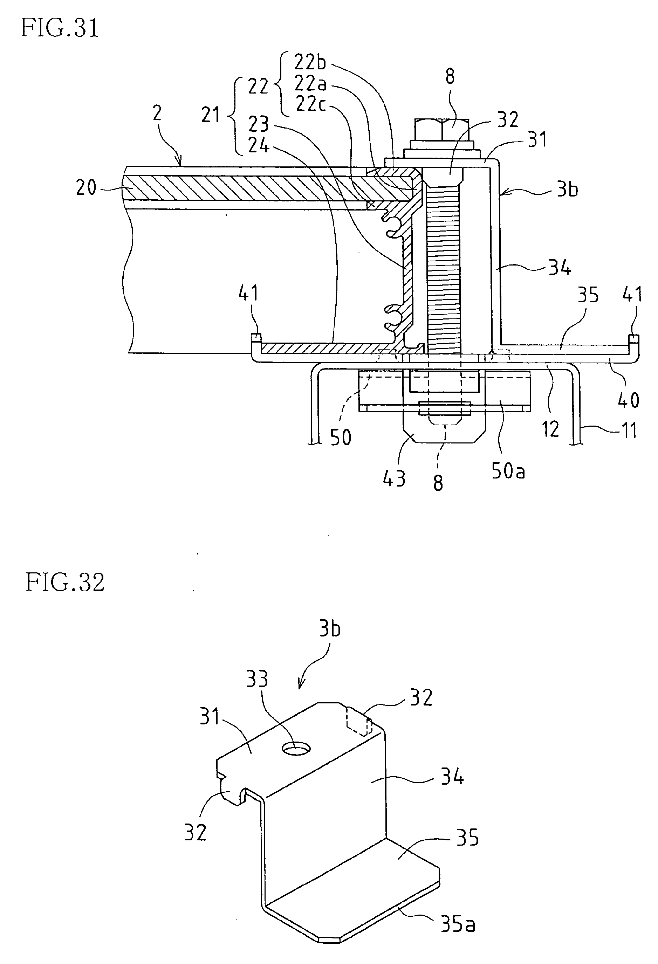

FIG. 31 is a cross-sectional view showing the attachment structure for attaching the edge portion of the solar cell module 2 to the right and left structure installation stands 10. FIG. 32 is a perspective view showing an upper fixing fitting 3b used in the attachment structure in FIG. 31.

As shown in FIG. 32, the upper fixing fitting 3b is formed to have protrusion pieces 32 protruding downward at both edge portions in the front-rear direction of a flat pressing plate 31, a pressing plate hole 33 formed through at the center portion of the pressing plate 31, an upstanding wall 34 vertically bent from one edge of the pressing plate 31, and a bottom piece 35 bent laterally from the lower edge of the upstanding wall 34.

As in the top plate 12 of the center structure installation stand 10, a top plate hole 13 into which the bolt 8 is inserted, a T-shaped attachment aid hole 15, and a positioning slit 14 for attaching the lower fixing fitting 4 are also formed in the top plates 12 of the right and left structure installation stands 10, and the lower fixing fitting 4 is locked in the T-shaped attachment aid hole 15 and the positioning slit 14.

As shown in FIG. 31, the bottom piece 24 of the frame member 21 of the solar cell module 2 on the left or right is inserted and disposed in a space extending from approximately the center of the lower fixing fitting 4 to the claw piece 41 located inside, and the bottom piece 35 of the upper fixing fitting 3b is disposed in a space extending from approximately the center of the lower fixing fitting 4 to the claw piece 41 located outside. The pressing plate 31 of the upper fixing fitting 3b is mounted on the holding portion 22 of the frame member 21 of the solar cell module 2, and the protrusion pieces 32 of the upper fixing fitting 3b are pressed against the holding portion 22 of the solar cell module 2 so as to position the solar cell module 2. The bolt 8 is inserted into the pressing plate hole 33 in the upper fixing fitting 3b and the upper plate hole 42 in the upper plate 40 of the lower fixing fitting 4, then screwed into the lower plate fastening hole 51 in the lower plate 50 through the top plate hole 13 in the top plate 12, and tightened, whereby the edge portion of the solar cell module 2 is fixedly supported in a sandwiched manner between the lower fixing fitting 4 and the upper fixing fitting 3b.

In this way, the center structure installation stand 10 and the right and left structure installation stands 10 have different attachment structures for attaching the edge portion of the solar cell module 2. Note that when the two solar cell modules 2 on the lower side, one on the right and the other on the left, are mounted on the mounting bars 11 of the three structure installation stands 10, the edge portions on the inclined lower side of the two solar cell modules 2 on the lower side, one on the right and the other on the left, are brought to abut against the abutting portions 73m of the front brackets 73 of the mounting bars 11, and for each of the mounting bars 11, the edge portion of the solar cell module 2 is sandwiched between the lower fixing fitting and the upper fixing fitting and fixed. This enables three functions to be achieved at the same time, namely, as described above, a function of the abutting portions 73m of the front bracket 73 positioning the solar cell module 2 as a stopper, a function of improving the load bearing of the site where the mounting bar 11 and the front bracket 73 are joined, and a function of preventing waterdrops from falling on the bottom plate 73a of the front bracket 73 and the base rail 71.

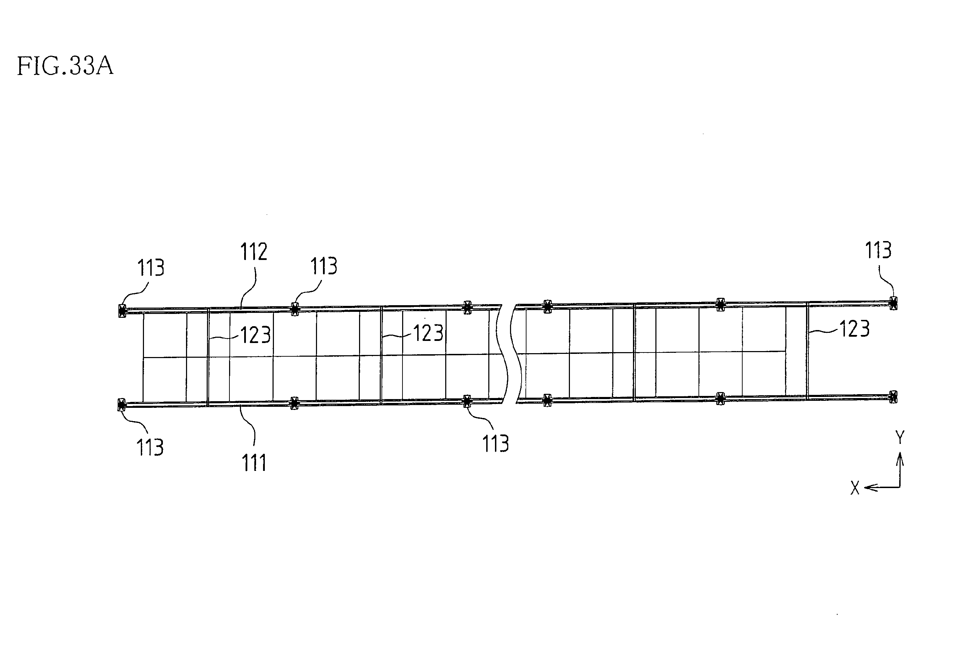

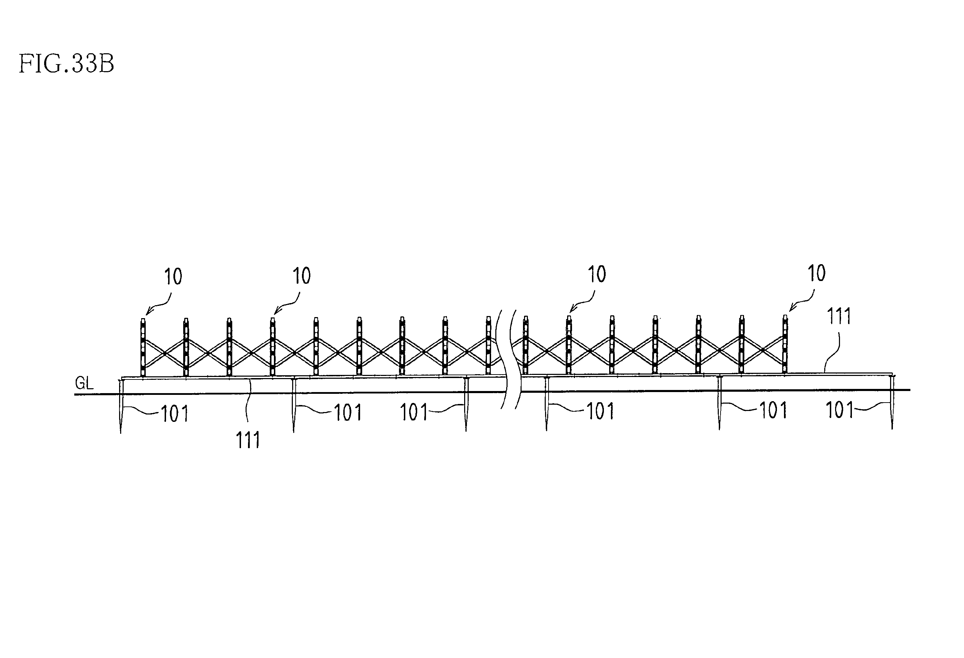

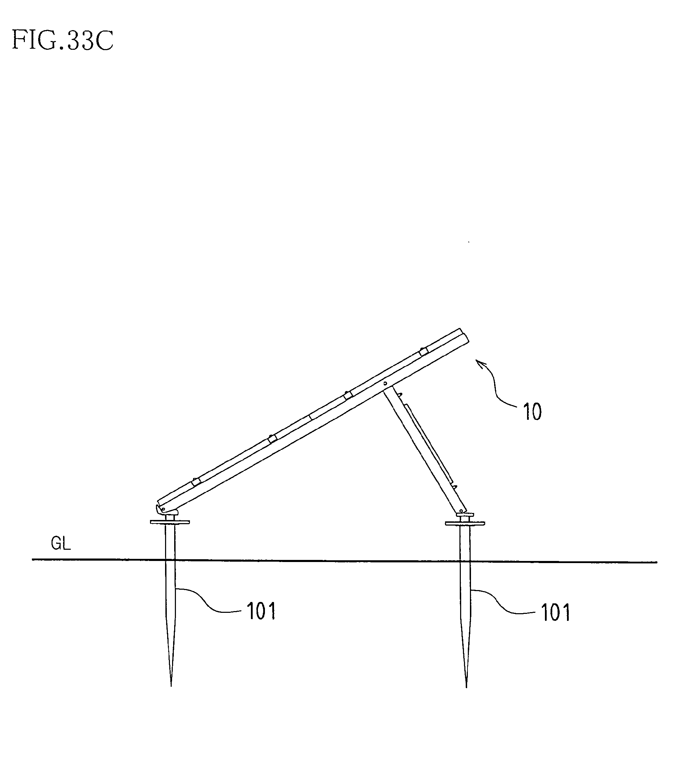

The following is a description of another example of a solar cell system using the structure installation stand according to the above embodiment. FIGS. 33A, 33B, and 33C are a plan view, a front view, and a lateral view schematically showing the overall configuration of the solar cell system.

In this solar cell system, as shown in FIGS. 33A to 33C, a plurality of stakes 101 are piled in ground GL so as to be arranged at equal intervals in two rows in the x direction parallel to each other. Long base rails 111 and 112 are respectively fixed onto the stakes 101 in two rows, the plurality of structure installation stands 10 are arranged side by side on the base rails 111 and 112, and a large number of solar cell modules (not shown) are mounted on the structure installation stands 10.

The stakes 101 each have its top portion positioned approximately 30 cm above the ground GL, and the respective base rails 111 and 112 are mounted on the top portions of the stakes 101. Accordingly, the structure installation stands 10 and the solar cell modules will be separated from the ground GL by 30 cm or more. This is for preventing the solar cell modules from being in a shadow of a weed that has grown in the ground GL, a neighboring fence, or the like, or the solar cell modules from being underwater due to heavy rain or the like.

The base rails 111 and 112 each have a hat-shaped cross section, the open side of the hat shape is facing upward, a flat base face is formed by brim-shaped flat plate portions of the base rails 111 and 112, and the structure installation stands 10 are mounted on the brim-shaped flat plate portions of the base rails 111 and 112 and fixed. The length of the base rails 111 and 112 extends tens of meters. It is difficult to realize the long base rails 111 and 112 as described with a single structure, and thus a plurality of short base rails are arranged and connected so as to form a long base rail, as will be describe below.

The structure installation stands 10 are the same as those shown in FIGS. 1 and 2, the front bracket 73 and the rear bracket 74 are fixed to the brim-shaped flat plate portions of the base rails 111 and 112, the front end portion 11a of the mounting bar 11 is joined and fixed to the front bracket 73, the lower end portion of the vertical bar 16 is joined to the rear bracket 74, and the vertical bar 16 is interposed between the rear bracket 74 and a location about one-quarter from the upper end of the mounting bar 11 and fixed. Then, two solar cell modules are arranged and disposed, one above the other, between the mounting bars 11 of the two structure installation stands 10 that are adjacent to each other. In FIGS. 33A and 33B, in the structure installation stands 10 at the leftmost and rightmost ends, the edge portions of the two solar cell modules 2, one above the other, are mounted on the mounting bars 11 of the structure installation stands 10, in the same manner as that of the right and left structure installation stands 10 in FIG. 1. Further, in FIGS. 33A and 33B, in other structure installation stands 10 excluding those at the leftmost and rightmost ends, the edge portions of the two solar cell modules 2 are mounted, one above the other, on the right and left of the mounting bar 11 of the structure installation stands 10, in the same manner as that of the center structure installation stand 10 in FIG. 1.

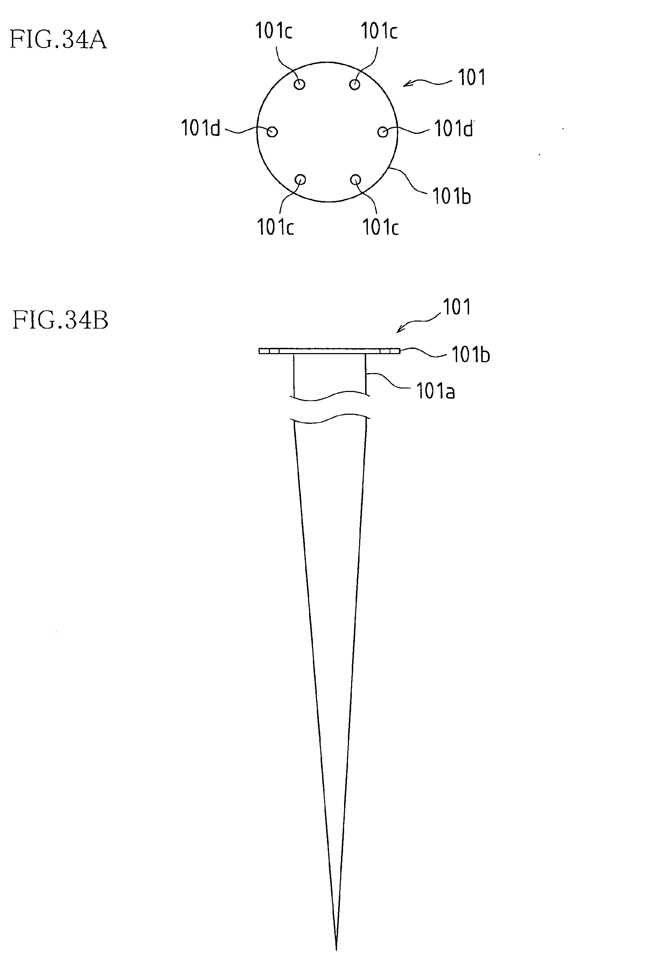

FIGS. 34A and 34B are a plan view and a lateral view showing the stake 101. The stake 101 has a shank portion 101a having a sharpened lower end and a flange portion 101b provided at the upper end of the shank portion 101a, and six holes 101c and 101d in total are formed near the outer edge of the flange portion 101b. A spiral groove like a male screw is engraved on the outer circumference of the shank portion 101a of the stake 101. The spiral groove on the outer circumference of the shank portion 101a digs into soil and stones in the ground by merely driving the shank portion 101a of the stake 101 into the ground, whereby the stake 101 is firmly fixed. This enables construction work to be simplified.

Note that a configuration may be adopted in which a stake with a shank portion having a smooth outer circumference is used instead of the stake 101, a hole is dug in the ground, the stake is set up in this hole, and concrete is poured thereinto, thereby fixing the stake.

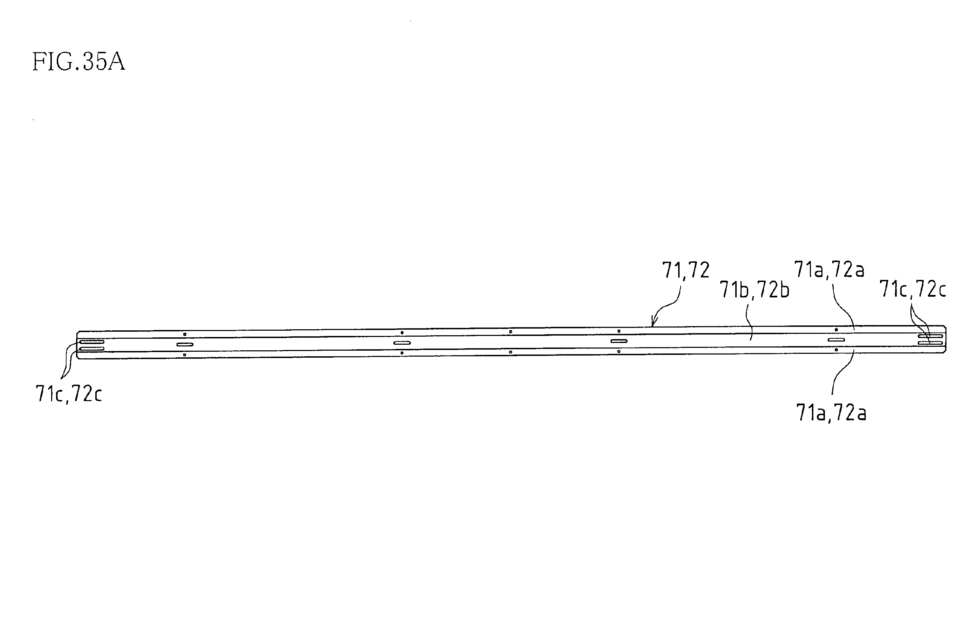

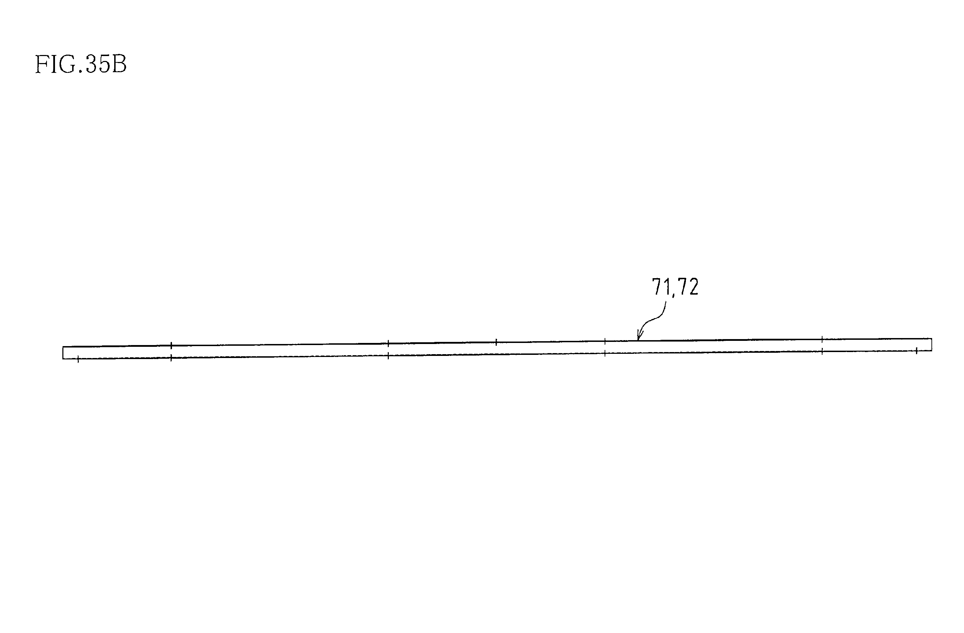

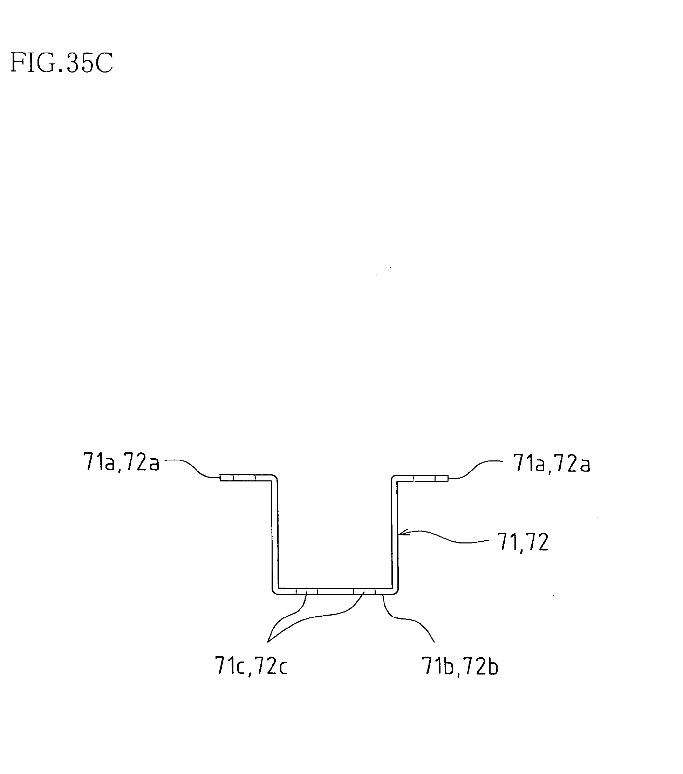

FIGS. 35A, 35B, and 35C are a plan view, a lateral view, and a cross-sectional view showing the short base rails 71 and 72 arranged and connected in order to form the long base rails 111 and 112. The base rails 71 and 72 correspond to the base rails 71 and 72 shown in FIGS. 1 and 2. The cross section thereof has a hat shape, and the brim-shaped flat plate portions 71a and 72a are formed on both sides of the hat shape. In both end portions of bottom plates 71b and 72b of the base rails 71 and 72, two long holes 71c and 72c are formed parallel to each other in the lengthwise direction of the base rails.

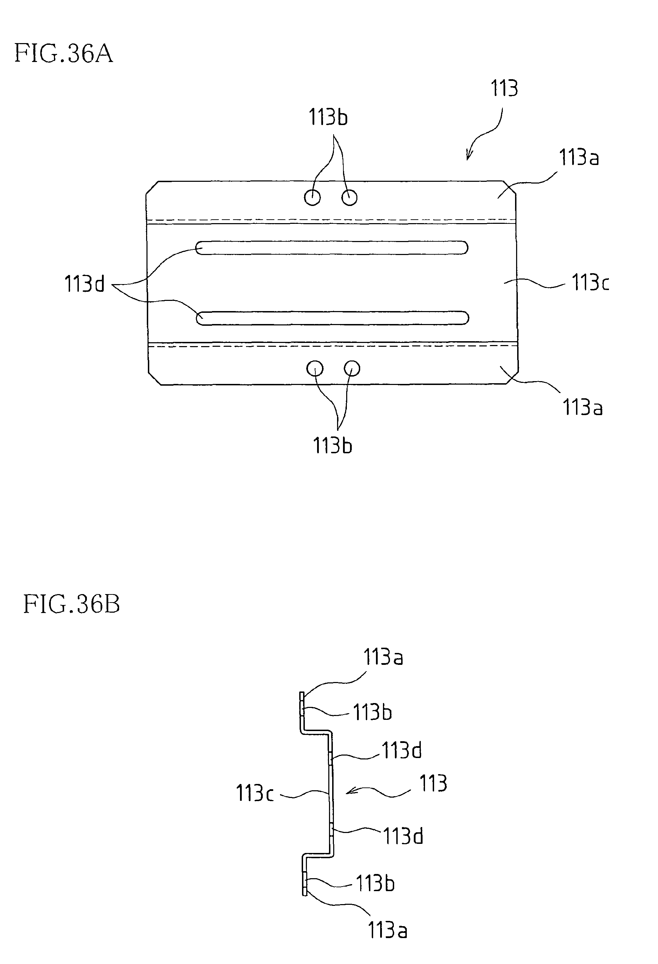

FIGS. 36A and 36B are a plan view and across-sectional view showing a base rail connecting member 113 used for connecting the base rails 71 and 72. The base rail connecting member 113 has a hat-shaped cross section, as with the base rails 71 and 72, and brim-shaped flat plate portions 113a are formed on both sides of the hat shape. Two screw holes 113b are formed in each of the brim-shaped flat plate portions 113a on both sides. Furthermore, two long holes 113d are formed parallel to each other along the brim-shaped flat plate portions 113a on both sides in a bottom plate 113c of the base rail connecting member 113.

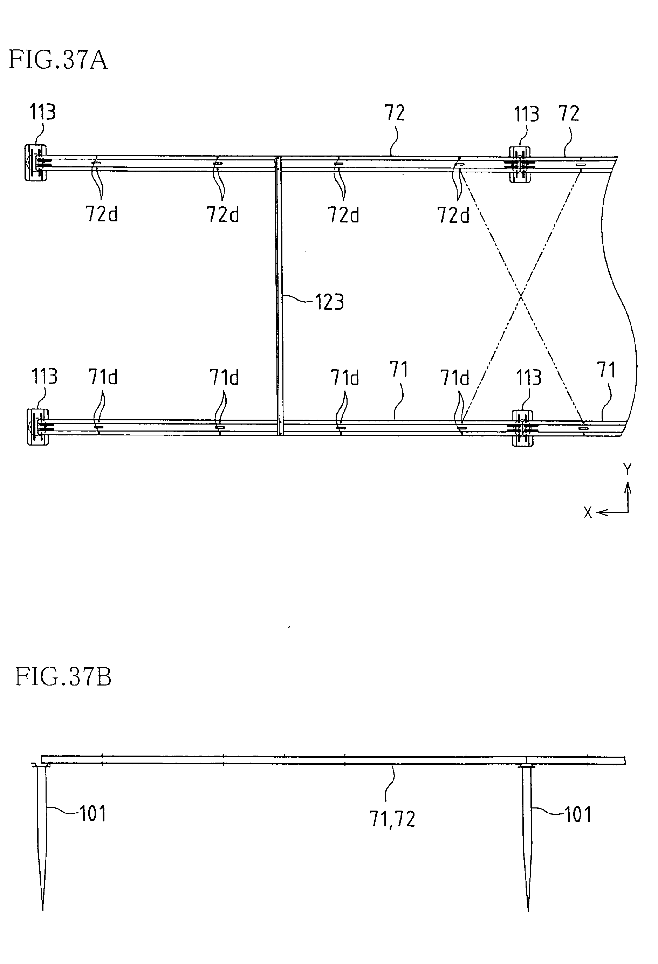

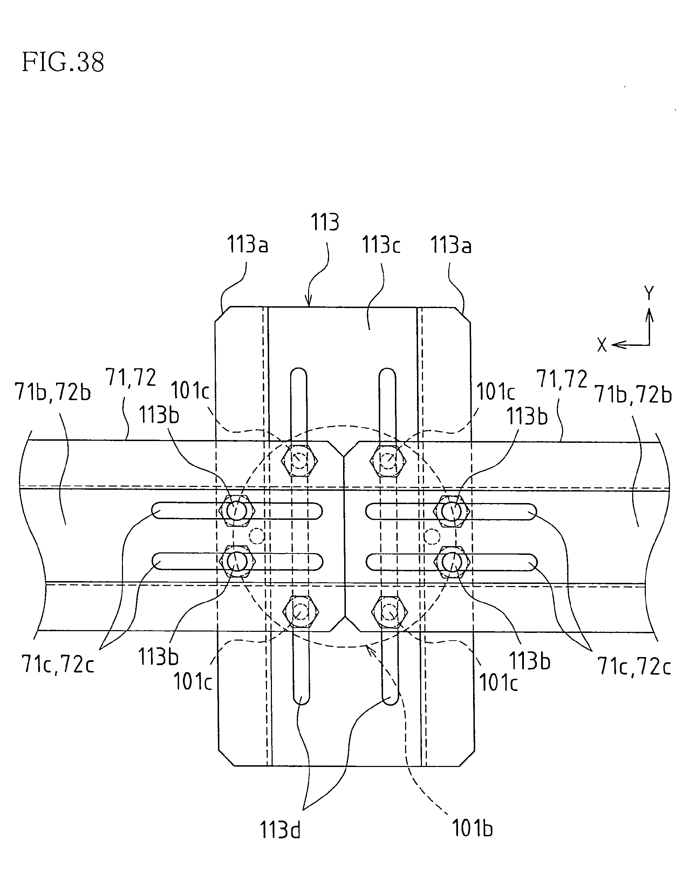

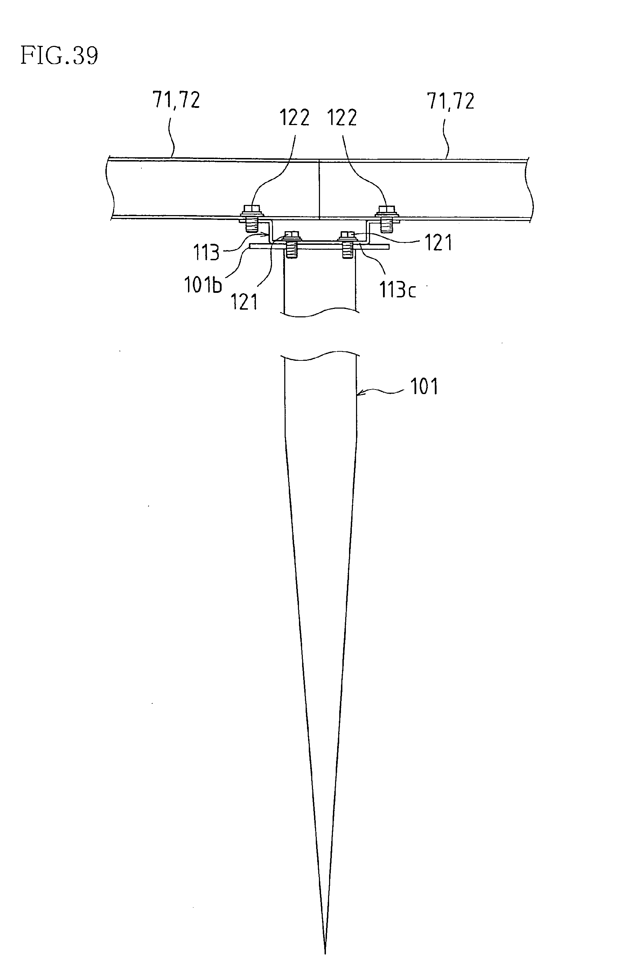

FIGS. 37A and 37B are a plan view and a lateral view showing a state in which the two base rails 71 and the two base rails 72 are each connected. Further, FIGS. 38 and 39 are a plan view and a lateral view showing the periphery of an enlarged location where two base rails are connected. The top face of the flange portion 101b of the stake 101 is a flat face, the bottom plate 113c of the base rail connecting member 113 is mounted on this flat face, the two long holes 113d in the bottom plate 113c of the base rail connecting member 113 overlap four screw holes 101c near the outer edge of the flange portion 101b, and four bolts 121 are screwed into the four screw holes 101c in the flange portion 101b through the two long holes 113d in the bottom plate 113c of the base rail connecting member 113. The bolts 121 are inserted through the two long holes 113d in the bottom plate 113c of the base rail connecting member 113. Thus, in a temporarily clamping state in which the bolts 121 are loosened, it is possible to allow the base rail connecting member 113 to slide in the lengthwise direction of the long holes 113d, that is, in the y direction. After the position of the base rail connecting member 113 in the y direction has been determined, the bolts 121 are fastened, whereby the base rail connecting member 113 is fixed.

Furthermore, the edge portions of the bottom plates 71b (or 72b) of the two base rails 71 (or 72) are respectively mounted on the brim-shaped flat plate portions 113a on both sides of the base rail connecting member 113. Both the two base rails 71 (or 72) have the long holes 71c (or 72c) in the bottom plates 71b (or 72b) overlapping the screw holes 113b in the brim-shaped flat plate portions 113a, and two bolts 122 are screwed into the screw holes 113b in the brim-shaped flat plate portions 113a through the long holes 71c (or 72c) in the bottom plates 71b (or 72b). In a temporarily clamping state in which the bolts 122 are loosened, it is possible to slide the two base rails 71 (or 72) in the lengthwise direction of the long holes 71c (or 72c), that is, in the x direction. After the positions of the two base rails 71 (or 72) in the x direction have been determined, the bolts 122 are fastened, whereby the two base rails 71 (or 72) are fixed.

Further, as shown in FIGS. 37A and 37B, in order to mount the four structure installation stands 10, four sets of two screw holes 71d for fixing the front brackets 73 are formed in the brim-shaped flat plate portions 71a of the base rail 71, whereby the four front brackets 73 can be fixed. Similarly, four sets of two screw holes 72d for fixing the rear brackets 74 are formed in the brim-shaped flat plate portions 72a of the base rail 72, whereby the four rear brackets 74 can be fixed.

Furthermore, both ends of a support bar 123 disposed in the direction orthogonal to the base rails 71 and 72 are joined and fixed in the center of the base rails 71 and 72 that are parallel to each other and form a pair.

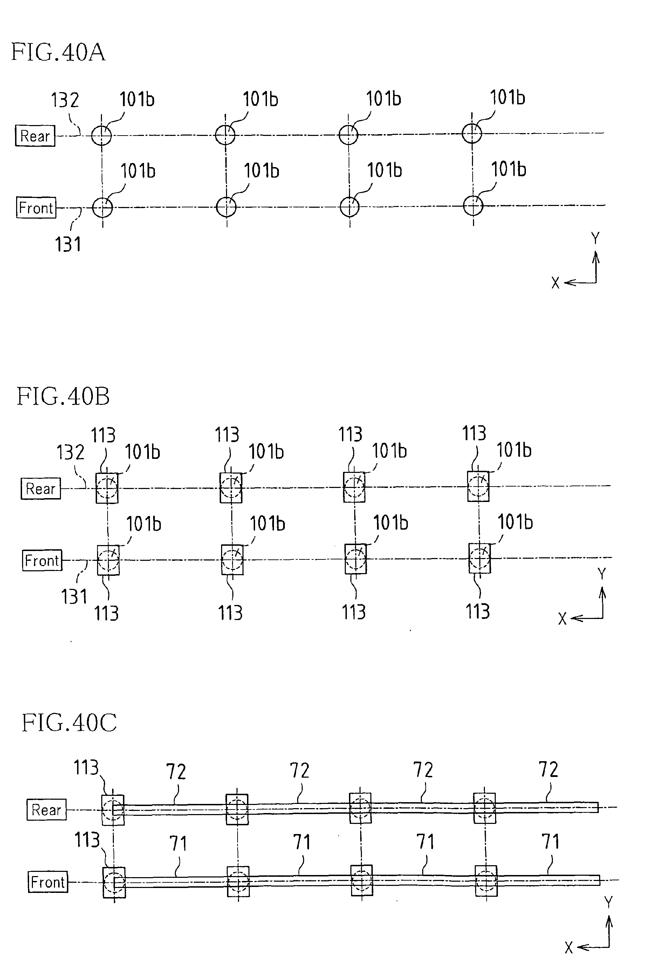

The following is a description of the construction processes for constructing the solar cell system in FIGS. 33A to 33C with reference to FIGS. 40A to 40F

First, as shown in FIG. 40A, two rows of straight lines 131 and 132 in the x direction on the ground surface are obtained with, for instance, a survey device using laser light, and the positions of the stakes 101 are obtained and marked on these lines 131 and 132. The positions of the stakes 101 are determined on both the lines 131 and 132 at intervals each having the same length as the length of the base rails 71 and 72. Then, the stakes 101 are piled at respective positions. Further, the flange portions 101b of the stakes 101 are positioned at a height of approximately 30 cm from the ground, and disposed substantially horizontally.

As shown in FIG. 40B (see FIGS. 37A to 39 for details), the respective base rail connecting members 113 are mounted on the flange portions 101b of the stakes 101, and for each of the flange portions 101b, the four bolts 121 are screwed into the four screw holes 101c in the flange portion 101b through the long holes 113d in the bottom plate 113c of the base rail connecting member 113. Accordingly, on the lines 131 and 132 in two rows, the base rail connecting members 113 are positioned at intervals each having the same length as the length of the base rails 71 and 72.

At this time, the bolts 121 are loosened in a temporarily clamping state, whereby the base rail connecting members 113 are allowed to slide in the lengthwise direction of the long holes 113d, that is, in the y direction. The range of movement in the y direction is determined by the length of the long holes 113d in the base rail connecting members 113, and is approximately ±50 mm, for example.

As shown in FIG. 40C (see FIGS. 37 to 39 for details), the base rails 71 are each extended between the base rail connecting members 113 on the one line 131, and for each of the base rails 71, both end portions of the bottom plate 71b of the base rail 71 are mounted on the brim-shaped flat plate portions 113a of the respective base rail connecting members 113. Then, for both end portions of the bottom plate 71b, the long holes 71c in the bottom plate 71b overlap the screw holes 113b in the brim-shaped flat plate portions 113a, and the two bolts 122 are screwed into the screw holes 113b in the brim-shaped flat plate portions 113a through the long holes 71c in the bottom plate 71b.

Similarly, the base rails 72 are each extended between the base rail connecting members 113 on the other line 132, and for each of the base rails 72, both end portions of the bottom plate 72b of the base rail 72 are mounted on the brim-shaped flat plate portions 113a of the respective base rail connecting members 113. Then, for both end portions of the bottom plate 72b as well, the long holes 72c in the bottom plate 72b overlap the screw holes 113b in the brim-shaped flat plate portions 113a, and the two bolts 122 are screwed into the screw holes 113b in the brim-shaped flat plate portions 113a through the long holes 72c in the bottom plate 72b.

At this time, the bolts 122 are loosened in a temporarily clamping state, whereby the edge portions of the base rails 71 and 72 are allowed to slide in the lengthwise direction of the long holes 71c and 72c, that is, in the x direction. The range of movement in the x direction is determined by the length of the long holes 71c and 72c in the base rails 71 and 72, and is approximately ±50 mm, for example.

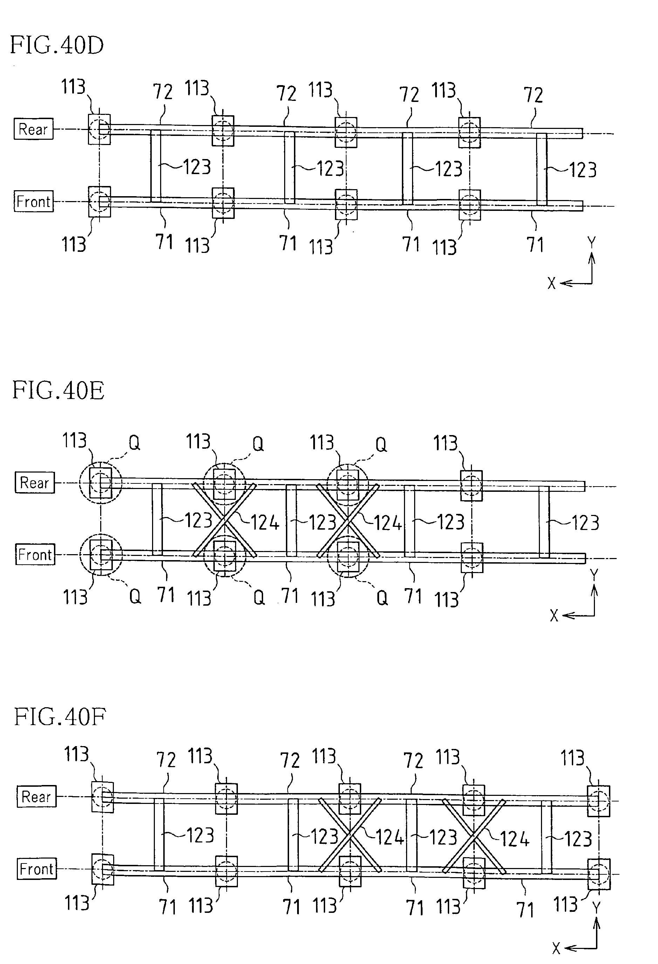

In this state, the base rail connecting members 113 on which the edge portions of the base rails 71 and 72 are mounted are allowed to slide in the y direction, and also the edge portions of the base rails 71 and 72 are allowed to slide in the x direction. Thus, the edge portions of the base rails 71 and 72 can be moved in the x and y directions. The range of movement of the edge portions of the base rails 71 and 72 is approximately ±50 mm in both the x and y directions, and is a circle range Q (shown in FIG. 40E) as shown by a dotted line.

As shown in FIG. 40D, for each pair of the base rails 71 and 72 facing each other, the support bar 123 is disposed between the base rails 71 and 72, and both ends of the support bar 123 are joined and fixed in the center of the base rails 71 and 72. At this time, the support bar 123 is disposed in the direction orthogonal to the base rails 71 and 72. In this way, the spaced distance between all the base rails 71 and 72 is constant. Thus, the spaced distance between the base rail 111 obtained by connecting the base rails 71 and the base rail 112 obtained by connecting the base rails 72 as shown in FIGS. 33A to 33C is also constant.

As shown in FIG. 40E, a brace 124 is extended between the first base rail 71 and the second base rail 72, and another brace 124 is extended between the second base rail 71 and the first base rail 72, and the braces 124 are fixed. Similarly, a brace 124 is extended between the second base rail 71 and the third base rail 72, and another brace 124 is extended between the third base rail 71 and the second base rail 72, and the braces 124 are fixed.

The braces 124 are two bars that are obliquely crossed and mutually fixed. The edge portions of the braces 124 are fixed to the first and second base rails 71 (or 72), and thus the edge portions of the first and second base rails 71 (or 72) are positioned so as to butt against each other. Similarly, the edge portions of the second and third base rails 71 (or 72) are positioned so as to butt against each other.

Further, the braces 124 maintain the spaced distance between the base rails 71 and 72. The spaced distance achieved by the braces 124 is the same as the spaced distance achieved by the support bars 123. Accordingly, the first base rails 71 and 72 facing each other are parallel, and the second base rails 71 and 72 facing each other are also parallel.

In this way, after positioning the first and second base rails 71 and 72, the bolts 121 are finally tightened on both end portion sides of the base rails 71 and 72, the base rail connecting members 113 are each fixed to the flange portion 101b of the stake 101, the bolts 122 are finally tightened, and both end portions of the base rails 71 and 72 are fixed to the brim-shaped flat plate portions 113a of the base rail connecting members 113. In this way, both end portions of the first and second the base rails 71 and 72 are fixed.

Next, as shown in FIG. 40F, the braces 124 extended between the first and second base rails are removed. Then, one of the braces 124 is extended between the third base rail 71 and the fourth base rail 72, and the other brace 124 is extended between the third base rail 71 and the fourth base rail 72, and the braces 124 are fixed. Specifically, the braces 124 are moved.

Accordingly, the end portions of the third and fourth base rails 71 (or 72) are positioned so as to butt against each other. Further, the third base rails 71 and 72 facing each other are parallel, and the fourth base rails 71 and 72 facing each other are also parallel.

In this way, after positioning the third and fourth base rails 71 and 72, the bolts 121 and 122 on the sides of both end portions of the base rails 71 and 72 are tightened, whereby both end portions of the base rails 71 and 72 are fixed.

After this, the braces 124 positioned on the left of the two sets of the braces 124 are removed. The removed braces 124 are extended between the next base rails 71 and 72 in the order and fixed, and both end portions of the base rails 71 and 72 newly positioned by the braces 124 are fixed, whereby the base rails 71 and 72 are sequentially fixed.

Then, when both end portions of the last base rails 71 and 72 in the order are fixed, the braces 124 are removed. Further, the support bars 123 are left and not removed in order to reinforce the long base rails 111 and 112 as shown in FIGS. 33A to 33C.

By using such processes in FIGS. 40A to 40F, the long base rails 111 and 112 as shown in FIGS. 33A to 33C can be disposed parallel to each other with a constant spaced distance therebetween, whereby the brim-shaped flat plate portions of the base rails 111 and 112 can be used to form a flat base face.

After that, following the processes shown in FIGS. 9 to 16, the plurality of structure installation stands 10 are arranged side by side on the base rails 111 and 112 and fixed. Furthermore, a large number of the solar cell modules 2 are installed by fixing the edge portions of the solar cell modules 2 onto the mounting bars 11 of the structure installation stands 10, as shown in FIGS. 19 and 31.

It should be noted that the present invention is not limited to the embodiments described above, and various modifications are possible. For example, although the cross sections of the mounting bars and vertical bars have a hat shape and a substantially U shape, the cross section may have a C shape or the like.

The present invention may be embodied in various other forms without departing from the spirit or essential characteristics thereof. Therefore, the above-described embodiments are considered in all respects as illustrative and not limiting. The scope of the invention is indicated by the appended claims rather than by the foregoing description. All variations and modifications falling within the equivalency range of the appended claims are intended to be embraced therein.

This application claims priority on Japanese Patent Application No. 2008-311260 filed in Japan on December 5, 2008, the entire contents of which are incorporated herein by reference.

### Industrial Applicability

The present invention is applicable as a structure installation stand that is utilized in order to install a flat plate-like structure such as a solar cell module on the ground, a flat roof, or the like.

### Description of Reference Numerals

- 1: Solar cell system
- 2: Solar cell module
- 3a and 3b: Upper fixing fitting
- 4: Lower fixing fitting
- 10: Structure installation stand
- 11: Mounting bar
- 12: Top plate
- 16: Vertical bar
- 20: Solar cell panel
- 21: Frame member
- 71, 72, 111, and 112: Base rail
- 73: Front bracket
- 74: Rear bracket
- 75, 77, 83, 85, 121, and 122: Bolt
- 91, 92, and 93: Brace
- 101: Stake
- 113: Base rail connecting member
- 123: Support bar
- 124: Brace

## Claims

1. A structure installation stand comprising a front bracket fixed onto a base face and a mounting bar on which a structure is mounted, the mounting bar being inclined relative to the base face, and a front end portion of the inclined mounting bar being fixed with the front bracket,
wherein the front bracket has an abutting portion that abuts against an edge portion on an inclined lower side of the structure mounted on the inclined mounting bar.

2. The structure installation stand according to claim 1,
wherein the mounting bar and the structure are prevented from moving by the edge portion on the inclined lower side of the structure abutting against the abutting portion of the front bracket.

3. The structure installation stand according to claim 1,
wherein the front bracket has a bottom portion that abuts against the base face, and a side wall portion that is arranged upright from the bottom portion, the side wall portion is fastened to the front end portion of the inclined mounting bar, a front edge side of the side wall portion protrudes above the front end portion of the mounting bar so as to form the abutting portion, and the abutting portion abuts against the edge portion on the inclined lower side of the structure mounted on the mounting bar.

4. The structure installation stand according to claim 1,
wherein the edge portion on the inclined lower side of the structure is positioned, by the abutting portion of the front bracket, so as to jut out beyond the bottom portion of the front bracket.

5. The structure installation stand according to claim 1,
wherein a base rail having a hat-shaped cross section is used as a base, an open side of the hat shape of the base rail is facing upward, brim-shaped flat plate portions on both sides of the hat shape of the base rail serve as the base face, and the front bracket is fixed so as to overlap the brim-shaped flat plate portions on both sides of the hat shape on the open side of the hat shape of the base rail.

6. The structure installation stand according to claim 1, comprising:
a rear bracket that is fixed onto the base face so as to be spaced apart from the front bracket; and
a vertical bar that connects and joins the mounting bar to the rear bracket.

7. A solar cell system in which a plurality of the structure installation stands according to any one of claims 1 to 6 are arranged side by side, and a solar cell module is mounted on the structure installation stands.

8. The solar cell system according to claim 7,
wherein two base rails each having a hat-shaped cross section are fixed parallel to each other, with an open side of the hat shape of the base rails facing upward, and brim-shaped flat plate portions on both sides of the hat shape of the base rails serve as a base face,
the front bracket of each of the structure installation stands is fixed so as to overlap the brim-shaped flat plate portions on both sides of the hat shape of one of the base rails,
the rear bracket of each of the structure installation stands is fixed so as to overlap the brim-shaped flat plate portions on both sides of the hat shape of the other base rail, and
the front end portion of the inclined mounting bar of each of the structure installation stands is fastened to the front bracket, and the vertical bar is inserted and fixed between the inclined mounting bar and the rear bracket of each of the structure installation stands.
